# EUROPEAN PATENT APPLICATION

(11) **EP 3 243 886 A1**
(43) Date of publication of application: **15.11.2017**
(21) Application number: 16169516.8
(22) Date of filing: 13.05.2016
(51) Int. Cl.: C09J 7/02, C09J 153/02

(54) **RUBBER-BASED PRESSURE-SENSITIVE ADHESIVE HAVING LOW VOC CHARACTERISTICS**

(71) Applicant: 3M Innovative Properties Company, Saint Paul, MN 55133-3427 (US)
(72) Inventor: Bieber, Pierre, 41453 Neuss (DE); Stegmaier, Petra, 41453 Neuss (DE); Matzeit, Niklas, 41453 Neuss (DE); Overbeck, Janina, 41453 Neuss (DE); Goeb, Siegfried, 41453 Neuss (DE); Beuer, Christian, 41453 Neuss (DE); Miesl, Christian, 40705 Hilden (DE); Wilczewski, Juergen, 40705 Hilden (DE); Tekdemir, Mehmet, 40705 Hilden (DE); Yilmaz, Yueksel, 40705 Hilden (DE); Balyk, Anton, 40705 Hilden (DE); Gusakov, Sergej, 40705 Hilden (DE); Buettner, Joern, 41453 Neuss (DE); Parys, Claudia, 40705 Hilden (DE); Klünker, Eike, 41453 Neuss (DE); Satrijo, Andrew, Saint Paul, MN Minnesota 55133-3427 (US)
(74) Representative: Gabriel, Kiroubagaranne

(57) **Abstract**

The present disclosure relates to a pressure sensitive adhesive comprising:
a) a multi-arm block copolymer of the formula Qₙ-Y, wherein:
(i) Q represents an arm of the multi-arm block copolymer and each arm independently has the formula G-R,
(ii) n represents the number of arms and is a whole number of at least 3, and
(iii) Y is the residue of a multifunctional coupling agent,
wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polymeric plasticizer having a weight average molecular weight M_{w} comprised between 10.000 and 100.000 g/mol;
c) at least one hydrocarbon tackifier which is primarily compatible with the rubbery blocks;
d) a glassy block compatible aromatic resin having a softening point value (RBSP) of at least 150°C, when measured by the ring and ball test method described in the experimental section; and
e) optionally, a linear block copolymer of the formula L-(G)ₘ, wherein L is a rubbery block comprising a polymerized olefin, a polymerized conjugated diene, a hydrogenated derivative of a polymerized conjugated diene, or any combinations thereof; and wherein m is 1 or 2.

The present disclosure also relates to a method of manufacturing such a pressure sensitive adhesive and uses thereof.

## Description

### Technical Field

The present disclosure relates generally to the field of pressure sensitive adhesives (PSA), more specifically to the field of rubber-based pressure sensitive adhesives and multilayer rubber-based pressure sensitive adhesive assemblies. The present disclosure also relates to a method of manufacturing such pressure sensitive adhesives and assemblies and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherend, and (4) sufficient cohesive strength. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2nd Ed., Hanser Gardner Publication, Cincinnati, OH, 2002. These measurements taken together constitute the balance of properties often used to characterize a PSA.

With broadened use of pressure-sensitive tapes over the years, performance requirements have become more demanding. Shear holding capability, for example, which originally was intended for applications supporting modest loads at room temperature, has now increased substantially for many applications in terms of operating temperature and load. Many applications require pressure sensitive adhesives to support a load at elevated temperatures, typically in the range of from 70°C to 120°C, for which high cohesive strengths are required. Similarly, an increased need has arisen for pressure sensitive adhesives having improved and versatile adhesion characteristics; in particular with respect to peel forces and shear resistance on various types of difficult to adhere surfaces, such as in particular the so-called low surface energy (LSE) and medium surface energy (MSE) substrates.

In addition to increasing performance requirements with regard to pressure sensitive adhesives, volatile organic compounds (VOC) reduction regulations are becoming increasingly important in particular for various kind of interior applications (occupational hygiene and occupational safety) such as e.g. in the construction market or in the automotive or electronics industries. Known acrylate-based pressure sensitive adhesives typically contain notable amounts of low molecular weight organic residuals, such as un-reacted monomers arising from their polymerization process, polymerization initiator residuals, contaminations from raw materials or degradation products formed during the manufacturing process. These low molecular weight residuals qualifying as VOC may diffuse out of the adhesive tape and can be potentially harmful. Known acrylate-based pressure sensitive adhesives, if not crosslinked, also generally suffer from lack of cohesive strength and excessive tendency to flow. This aspect may render the application and processability of uncrosslinked acrylate-based pressure sensitive adhesives particularly problematic, especially when made by a hotmelt process.

The reduction of organic solvent usage in the manufacturing process of pressure sensitive adhesives has quickly emerged as one straightforward means to reduce the overall VOC levels. The use of specific scavengers for organic contaminants, as described in WO 01/44400 (Yang), is another alternative way to achieve reduced VOC levels. However, the solutions for reducing overall VOC levels known from the prior art are often associated with increased manufacturing complexity and production costs. Further pressure sensitive adhesives provided with beneficial performance characteristics are described e.g. in US 2003/0082362 A1 (Khandpur et al.), in US 2004/0082700 A1 (Khandpur et al.), in WO 2008/073669 (Hanley et al.), and in EP 2 832 779 A1 (Bieber et al.).

Without contesting the technical advantages associated with the pressure sensitive adhesives known in the art, there is still a need for a stable and cost-effective pressure sensitive adhesive providing excellent and versatile adhesion characteristics, in particular with respect to various types of substrate, including the so-called LSE and MSE substrates, in combination with high shear strength at elevated temperatures (up to 90°C) and reduced overall VOC level characteristics. Other advantages of the pressure sensitive adhesives, assemblies and methods of the disclosure will be apparent from the following description.

### Summary

According to one aspect, the present disclosure relates to a pressure sensitive adhesive comprising:
a) a multi-arm block copolymer of the formula Qₙ-Y, wherein:
   (i) Q represents an arm of the multi-arm block copolymer and each arm independently has the formula G-R,
   (ii) n represents the number of arms and is a whole number of at least 3, and
   (iii) Y is the residue of a multifunctional coupling agent,
      wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polymeric plasticizer having a weight average molecular weight M_{w} comprised between 10.000 and 100.000 g/mol;
c) at least one hydrocarbon tackifier which is primarily compatible with the rubbery blocks;
d) a glassy block compatible aromatic resin having a softening point value (RBSP) of at least 150°C, when measured by the ring and ball test method described in the experimental section; and
e) optionally, a linear block copolymer of the formula L-(G)ₘ, wherein L is a rubbery block comprising a polymerized olefin, a polymerized conjugated diene, a hydrogenated derivative of a polymerized conjugated diene, or any combinations thereof; and wherein m is 1 or 2.

In another aspect, the present disclosure is directed to a multilayer pressure sensitive adhesive assembly comprising a pressure sensitive adhesive as described above and a backing layer adjacent to the pressure sensitive adhesive.

According to still another aspect, the present disclosure is directed to a method of manufacturing a pressure sensitive adhesive or a multilayer pressure sensitive adhesive assembly as described above, which comprises the steps of compounding the multi-arm block copolymer, the polymeric plasticizer, the at least one hydrocarbon tackifier which is primarily compatible with the rubbery blocks, the glassy block compatible aromatic resin, and optionally, a linear block copolymer.

According to yet another aspect, the present disclosure relates to the use of a pressure sensitive adhesive or a multilayer pressure sensitive adhesive assembly as described above for industrial applications, preferably for interior applications, more preferably for construction market applications, automotive applications or electronic applications.

### Detailed description

According to first aspect, the present disclosure relates to a pressure sensitive adhesive comprising:
a) a multi-arm block copolymer of the formula Qₙ-Y, wherein:
   (i) Q represents an arm of the multi-arm block copolymer and each arm independently has the formula G-R,
   (ii) n represents the number of arms and is a whole number of at least 3, and
   (iii) Y is the residue of a multifunctional coupling agent,
      wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polymeric plasticizer having a weight average molecular weight M_{w} comprised between 10.000 and 100.000 g/mol;
c) at least one hydrocarbon tackifier which is primarily compatible with the rubbery blocks;
d) a glassy block compatible aromatic resin having a softening point value (RBSP) of at least 150°C, when measured by the ring and ball test method described in the experimental section; and
e) optionally, a linear block copolymer of the formula L-(G)ₘ, wherein L is a rubbery block comprising a polymerized olefin, a polymerized conjugated diene, a hydrogenated derivative of a polymerized conjugated diene, or any combinations thereof; and wherein m is 1 or 2.

In the context of the present disclosure, it has been surprisingly found that a pressure sensitive adhesive comprising a multi-arm styrenic block copolymer of the formula described above, a polymeric plasticizer having a weight average molecular weight M_{w} comprised between 10.000 and 100.000 g/mol, at least one hydrocarbon tackifier which is primarily compatible with the rubbery blocks, and a glassy block compatible aromatic resin having a softening point value (RBSP) of at least 150°C, when measured by the ring and ball test method described in the experimental section, provides excellent characteristics and performance as to overall VOC levels reduction. In some advantageous aspects, the pressure sensitive adhesives as described herein are characterized by very low or even substantial absence of perceptible odor.

In addition, the pressure sensitive adhesives as described herein provide excellent and versatile adhesion characteristics, in particular with respect to various types of substrate, including the so-called LSE and MSE substrates, and in particular on automotive clear coats, in combination with high shear strength at elevated temperatures (up to 90°C). The pressure sensitive adhesives as described herein typically provide a static shear strength performance value of greater than 10000 min, when measured at 90°C according to the static shear test method described in the experimental section. The ability to provide this shear performance at such a high temperature allows meeting new industrial requirements, in particular in the transportation industry (automotive and aeronautics). Without wishing to be bound by theory, it is believed the high static shear strength performance is mainly due to the presence of the glassy block compatible aromatic resin having a softening point value (RBSP) of at least 150°C. Surprisingly, this high temperature shear performance is not achieved at the detrimental of peel adhesion characteristics, in particular with respect to various types of substrate, including the so-called LSE and MSE substrates, in particular on automotive clear coats. This is surprising result as the incorporation of end-block resins is known to provide stiffness to the resulting block copolymer-based pressure sensitive adhesives, which ultimately is known to detrimentally affect the peel adhesion characteristics especially on difficult to bond substrates (such as LSE or automotive clear coats).

Surprisingly, the pressure sensitive adhesives of the present disclosure provide this combination of advantageous performance characteristics without them being subjected to any post-crosslinking step, in particular crosslinking step with actinic radiation such as e.g. e-beam or UV irradiation. In some aspects, the pressure sensitive adhesives as described herein are free of any crosslinking additive, in particular free of chemical crosslinking additives such as multifunctional (meth)acrylate compounds. This is non-obvious technical approach as further chemical crosslinking is the main technical means commonly used in the art to increase shear and cohesive strength (especially shear performance at elevated temperature) of pressure sensitive adhesives. In addition, reaching high static shear strength performance at high temperature (e.g. 90°C) without additional crosslinking step was never observed before owing to the strong presumption that a temperature of 90°C would be too close to the softening point of the hard glassy segments.

The absence of any crosslinking step translates into various benefits. Besides saving an additional process step, the cost of additional expensive process liners and crosslinking additives may be saved. Furthermore, a better homogeneity of properties (in particular with respect to adhesive and cohesive properties) through the thickness of the pressure sensitive adhesive layer may be obtained owing to the absence of crosslinking gradients, which are typically observed in pressure sensitive adhesive layers crosslinked by irradiation treatment (e-beam or UV). This benefit allows in particular manufacturing high thickness pressure sensitive adhesives. Also, the absence of a crosslinking step allows a better formulation flexibility as components known to hinder the crosslinking reactions may not need to be avoided. In particular, pressure sensitive adhesives with higher filler loading (in particular pigments and electrically or thermally conductive fillers) may be easily formulated, which allows in particular manufacturing pressure sensitive adhesives provided with deeper dark colors or more efficient electrical and/or thermal conductivity.

In some aspects, the pressure sensitive adhesives according to the present disclosure are further characterized by providing excellent shear adhesion failure temperature (SAFT) performance, when measured according to the SAFT test method described in the experimental section.

In the context of the present disclosure, the Applicant faced the additional challenge of compounding highly viscous formulations comprising compounds having high softening point values (in particular, the glassy block compatible aromatic resins). According to the present disclosure, the compositions as described herein were formulated without using any liquid processing aids such as mineral oils, as taught in the prior art. In contrast, it has herein been made use of solid polymeric plasticizers having a carefully selected range of weight average molecular weight M_{w}. The use of selected polymeric plasticizers (in particular the polyisobutylene types) has been surprisingly found to provide the resulting pressure sensitive adhesives with not only advantageous processing and low VOC characteristics, but also excellent barrier properties (with respect to oxygen and moisture) and beneficial ageing performance, in particular better resistance to oxidation.

In some other aspects, the pressure sensitive adhesives according to the present disclosure are characterized by further providing excellent characteristics and performance as to overall fogging levels reduction. The low fogging characteristics typically translate into improved resistance of outgassed components to condensation, as well as improved thermal stability of the corresponding pressure sensitive adhesive.

As such, the pressure sensitive adhesives according to the present disclosure are particularly suited for (industrial) interior applications, more in particular for construction market applications, automotive applications or electronic applications. In the context of automotive applications, the pressure sensitive adhesives as described herein may find particular use for adhering e.g. automotive body side moldings, weather strips or rearview mirrors. In some aspects, the pressure sensitive adhesives as described herein may find particular utility in those applications requiring high temperature resistance and ability to maintain holding power at elevated temperature. In some further aspects, the pressure sensitive adhesives according to the present disclosure are provided with advantageous low fogging characteristics, which are particularly suited for electronic applications.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE, low density polyethylene or LDPE, LLDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, PC, PVC, PA, polyurethanes, PUR, TPE, POM, polystyrene, poly(methyl methacrylate) (PMMA), clear coat surfaces, in particular clear coats for vehicles like a car or coated surfaces for industrial applications and composite materials like fibre reinforced plastics.

The surface energy is typically determined from contact angle measurements as described, for example, in ASTM D7490-08.

The pressure sensitive adhesive according to the present disclosure comprises a multi-arm block copolymer of the formula Qₙ-Y, wherein:
(i) Q represents an arm of the multi-arm block copolymer and each arm independently has the formula G-R,
(ii) n represents the number of arms and is a whole number of at least 3, and
(iii) Y is the residue of a multifunctional coupling agent,
   wherein each R is a rubbery block comprising a polymerized conjugated diene, a hydrogenated derivative of a polymerized conjugated diene, or any combinations thereof; and each G is a glassy block comprising a polymerized monovinyl aromatic monomer.

In a typical aspect, a rubbery block exhibits a glass transition temperature (Tg) of less than room temperature. In some aspects, the Tg of the rubbery block is less than about 0 °C, or even less than about -10 °C. In some aspects, the Tg of the rubbery block is less than about -40 °C, or even less than about -60°C.

In a typical aspect, a glassy block exhibits a Tg of greater than room temperature. In some embodiments, the Tg of the glassy block is at least about 40°C, at least about 60 °C, at least about 80°C, or even at least about 100°C.

The terms "glass transition temperature" and "Tg" are used interchangeably and refer to the glass transition temperature of a material or a mixture. Unless otherwise indicated, glass transition temperature values are determined by Differential Scanning Calorimetry (DSC).

In a particular aspect of the present disclosure, the multi-arm styrenic block copolymer for use herein is such that n ranges from 3 to 10 or even from 3 to 5. In some other aspects, n is 4, while in some other executions, n is equal to 6 or more.

Suitable rubbery blocks R for use herein comprise polymerized conjugated dienes, hydrogenated derivatives of a polymerized conjugated diene, or combinations thereof. In some typical aspects, the rubbery block of at least one arm comprises a polymerized conjugated diene selected from the group consisting of isoprene, butadiene, ethylene butadiene copolymers, hydrogenated derivatives of polyisoprene or polybutadiene, and combinations or mixtures thereof. According to an advantageous aspect, the rubbery blocks of each arm comprise a polymerized conjugated diene selected from the group consisting of isoprene, butadiene, ethylene butadiene copolymers, hydrogenated derivatives of polyisoprene or polybutadiene, and any combinations or mixtures thereof.

According to a preferred aspect of the pressure sensitive adhesive according to the present disclosure, at least one of the rubbery blocks of the multi-arm block copolymer comprises a conjugated diene selected from the group consisting of isoprene, butadiene, and any combinations thereof. More preferably, each of the rubbery blocks of the multi-arm block copolymer comprises a conjugated diene selected from the group consisting of isoprene, butadiene, and any combinations or mixtures thereof.

According to a particularly advantageous aspect of the pressure sensitive adhesive according to the present disclosure, at least one arm of the multi-arm block copolymer is selected from the group consisting of styrene-isoprene-styrene, styrene-butadiene-styrene, styrene-ethylene-butylene-styrene, styrene-ethylene-propylene-styrene, and combinations thereof. More preferably, each arm of the multi-arm block copolymer is selected from the group consisting of styrene-isoprene-styrene, styrene-butadiene-styrene, styrene-ethylene-butylene-styrene, styrene-ethylene-propylene-styrene, and any combinations thereof. Even more preferably, each arm of the multi-arm block copolymer is selected from the group consisting of styrene-isoprene-styrene, styrene-butadiene-styrene, and any combinations thereof.

Suitable glassy blocks G for use herein comprise a polymerized monovinyl aromatic monomer. In some typical aspects, the glassy block of at least one arm comprises a monovinyl aromatic monomer selected from the group consisting of styrene, styrene-compatible blends, and any combinations thereof. According to an advantageous aspect, the glassy blocks of each arm comprise a monovinyl aromatic monomer selected from the group consisting of styrene, styrene-compatible blends, and any combinations thereof.

According to an advantageous execution of the present disclosure, the multi-arm block copolymer for use herein is a (multi-arm) star block copolymer. In a more advantageous aspect of the pressure sensitive adhesive according to the present disclosure, the multi-arm block copolymer is a polymodal block copolymer. As used herein, the term "polymodal" means that the copolymer comprises endblocks having at least two different molecular weights. Such a block copolymer may also be characterized as having at least one "high" molecular weight endblock, and at least one "low" molecular weight endblock, wherein the terms high and low are used relative to each other. In some particular aspects, the ratio of the number average molecular weight of the high molecular weight endblock, (Mn)H, relative to the number average molecular weight of the low molecular weight endblock,(Mn)L, is at least about 1.25.

In some particular aspects, (Mn)H ranges from about 5000 to about 50000. In some embodiments, (Mn)H is at least about 8000, and in some aspects at least about 10000. In some aspects, (Mn)H is no greater than about 35000. In some aspects, (Mn)L ranges from about 1000 to about 10000. In some aspects, (Mn)L is at least about 2000, and, in some aspects, at least about 4000. In some aspects, (Mn)L is less than about 9000, and, in some aspects, less than about 8000.

According to another beneficial aspect, the multi-arm block copolymer is an asymmetric block copolymer. As used herein, the term "asymmetric" means that the arms of the block copolymer are not all identical. Generally, a polymodal block copolymer is an asymmetric block copolymer (i.e., a polymodal asymmetric block copolymer) as not all arms of a polymodal block copolymer are identical since the molecular weights of the end blocks are not all the same. In some aspects, the block copolymers of the present disclosure are polymodal, asymmetric block copolymers.

Multi-arm block copolymers for use herein are described e.g. in US 7,163,741 B1 (Khandpur et al.). Methods of making multi-arm block copolymers, in particular polymodal asymmetric, block copolymers are described in, e.g., U.S. Patent No. 5,296,547 (Nestegard et al.), or in U.S. Patent No. 5,393,787 (Nestegard et al.), the content of which is herewith incorporated by reference.

Generally, the multifunctional coupling agent for use herein may be any polyalkenyl coupling agent or other material known to have functional groups that can react with carbanions of the living polymer to form linked polymers. The polyalkenyl coupling agent may be aliphatic, aromatic, or heterocyclic. Exemplary aliphatic polyalkenyl coupling agents include, but are not limited to, polyvinyl and polyalkyl acetylenes, diacetylenes, phosphates, phosphites, and dimethacrylates (e.g., ethylene dimethacrylate). Exemplary aromatic polyalkenyl coupling agents include but are not limited to, polyvinyl benzene, polyvinyl toluene, polyvinyl xylene, polyvinyl anthracene, polyvinyl naphthalene, and divinyldurene. Exemplary polyvinyl groups include, but are not limited to, divinyl, trivinyl, and tetravinyl groups. In some aspects, divinylbenzene (DVB) may be used, and may include o- divinyl benzene, m-divinyl benzene, p-divinyl benzene, and mixtures thereof. Exemplary heterocyclic polyalkenyl coupling agents include, but are not limited to, divinyl pyridine, and divinyl thiophene. Other exemplary multifunctional coupling agents include, but are not limited to, silicon halides, polyepoxides, polyisocyanates, polyketones, polyanhydrides, and dicarboxylic acid esters.

According to a typical aspect, the multi-arm block copolymer as described above is used for example in amounts of up to 80 wt%, based on the weight of the pressure sensitive adhesive. In some exemplary aspects, the amount of multi-arm block copolymer can be for example, in the range of from 20 wt% to 80 wt%, from 20 wt% to 70 wt%, from 25 wt% to 60 wt%, from 30 wt% to 60 wt%, or even from 35 wt% to 60 wt% of the multi-arm block copolymer, based on the weight of the pressure sensitive adhesive.

In some advantageous aspects, the pressure sensitive adhesive of the present disclosure may optionally comprise a linear block copolymer of the formula L-(G)ₘ, wherein L represents a rubbery block, G represents a glassy block, and m, the number of glassy blocks, is 1 or 2. Suitable rubbery blocks L for use herein comprise a polymerized olefin, a polymerized conjugated diene, a hydrogenated derivative of a polymerized conjugated diene, or any combinations thereof; and wherein m is 1 or 2. In the context of the present disclosure, it has been surprisingly found that the addition of a linear block copolymer as described above may provide various beneficial effects to the (co)polymeric precursor of the pressure sensitive adhesive and to the resulting pressure sensitive adhesive. In particular, the addition of a linear block copolymer as described above may advantageously impact the processability of the (co)polymeric precursor of the pressure sensitive adhesive due to the viscosity lowering effect of this compound, which in turn results in pressure sensitive adhesives provided with an improved visual and aesthetic appearance. Also, the presence of a linear block copolymer as described above may additionally provide the resulting pressure sensitive adhesive with an improved tack performance.

In some aspects, m is 1, and the linear block copolymer is a diblock copolymer comprising one rubbery block L and one glassy block G. In some aspects, m is 2, and the linear block copolymer comprises two glassy endblocks and one rubbery midblock, i.e., the linear block copolymer is a triblock copolymer.

In some aspects, the rubbery block L comprises a polymerized conjugated diene, a hydrogenated derivative of a polymerized conjugated diene, or any combinations thereof. In some aspects, the conjugated dienes comprise 4 to 12 carbon atoms. Exemplary conjugated dienes include, but are not limited to, butadiene, isoprene, ethylbutadiene, phenylbutadiene, piperylene, pentadiene, hexadiene, ethylhexadiene, and dimethylbutadiene. The polymerized conjugated dienes may be used individually or as copolymers with each other. Preferably, the rubbery block L of the linear block copolymer comprises a conjugated diene selected from the group consisting of isoprene, butadiene, and any combinations thereof. In some other aspects, the rubbery block L comprises a polymerized olefin, such as e.g. isobutylene.

In some aspects, at least one glassy block G comprises a polymerized monovinyl aromatic monomer. In some other aspects, both glassy blocks of a triblock copolymer comprise a polymerized monovinyl aromatic monomer. In some other aspects, the linear block copolymer comprises two glassy blocks. According to still another aspect, the monovinyl aromatic monomers comprise 8 to 18 carbon atoms. Exemplary monovinyl aromatic monomers include, but are not limited to, styrene, vinylpyridine, vinyl toluene, alpha-methyl styrene, methyl styrene, dimethylstyrene, ethylstyrene, diethyl styrene, t-butylstyrene, di-n-butylstyrene, isopropylstyrene, other alkylated-styrenes, styrene analogs, and styrene homologs. In some aspects, the monovinyl aromatic monomer is selected from the group consisting of styrene, styrene-compatible monomers or monomer blends, and any combinations thereof.

As used herein, "styrene-compatible monomers or monomer blends" refers to a monomer or blend of monomers, which may be polymerized or copolymerized, that preferentially associate with polystyrene or with the polystyrene endblocks of a block copolymer. The compatibility can arise from actual copolymerization with monomeric styrene; solubility of the compatible monomer or blend, or polymerized monomer or blend in the polystyrene phase during hot melt or solvent processing; or association of the monomer or blend with the styrene-rich phase domain on standing after processing.

In some other aspects, the linear block copolymer is a diblock copolymer. In some aspects, the diblock copolymer is selected from the group consisting of styrene-isoprene, and styrene-butadiene. In some aspects, the linear block copolymer is a triblock copolymer. In some aspects, the triblock copolymer is selected from the group consisting of styrene-isoprene-styrene, styrene-butadiene-styrene, styrene-ethylene-butylene-styrene, styrene-ethylene-propylene-styrene, styrene-isobutylene-styrene, and any combinations thereof. Diblock and triblock copolymers are commercially available, e.g., those under the trade name VECTOR available from Dexco Polymer LP, Houston, Texas; and those available under the trade name KRATON available from Kraton Polymers U.S. LLC, Houston, Texas. As manufactured and/or purchased, triblock copolymers may contain some fraction of diblock copolymer as well.

According to a typical aspect, the optional linear block copolymer as described above is used for example in amounts of up to 80 wt%, based on the weight of the pressure sensitive adhesive. In some exemplary aspects, the amount of linear block copolymer can be for example, in the range of from 20 wt% to 80 wt%, from 20 wt% to 70 wt%, from 25 wt% to 60 wt%, from 30 wt% to 60 wt%, or even from 35 wt% to 60 wt%, based on the weight of the pressure sensitive adhesive.

The pressure sensitive adhesive according to the present disclosure further comprises a polymeric plasticizer having a weight average molecular weight M_{w} comprised between 10.000 and 100.000 g/mol. Any polymeric plasticizers typically known by those skilled in the art may be used in the context of the present disclosure as long as they fulfill the above weight average molecular weight requirement.

The use of polymeric plasticizers having a weight average molecular weight M_{w} comprised between 10.000 and 100.000 g/mol, may advantageously impact the overall shear performance of the pressure sensitive adhesive, in particular the shear performance at elevated temperature (typically at 70°C). Additionally, polymeric plasticizers having a weight average molecular weight M_{w} comprised between 10.000 and 100.000 g/mol have been found to provide excellent characteristics and performance as to reduction of VOC and FOG levels.

Useful polymeric plasticizers for use herein are typically selected to be miscible with the other components in the composition such as the (co)polymeric material and any optional additives. Suitable polymeric plasticizers for use herein may be easily identified by those skilled, in the light of the present disclosure. Typical examples of polymeric plasticizers that can be used herein include, but are not limited to, those selected from the group consisting of polyisobutylenes, polyisoprenes, polybutadienes, amorphous polyolefins and copolymers thereof, silicones, polyacrylates, oligomeric polyurethanes, ethylene propylene copolymers, any combinations or mixtures thereof.

According to an advantageous aspect, the polymeric plasticizer has a weight average molecular weight M_{w} of less than 95.000 g/mol, less than 90.000 g/mol, less than 80.000 g/mol, less than 70.000 g/mol, less than 60.000 g/mol, less than 50.000 g/mol, or even less than 40.000 g/mol.

The weight average molecular weight M_{w} of the various polymeric compounds referred to herein (e.g. the plasticizer) may be determined by any methods known to the skilled person, for example Gel Permeation Chromatography (GPC) also known as Size Exclusion Chromatography (SEC) or by light scattering techniques. Unless otherwise stated, the weight average molecular weight Mw of the various polymeric compounds referred to herein (e.g. the plasticizer) is measured by light scattering according to ASTM D4001-13.

Advantageously still, the polymeric plasticizer has a weight average molecular weight M_{w} of at least 15.000 g/mol, at least 20.000 g/mol, or even at least 30.000 g/mol. In another advantageous aspect of the pressure sensitive adhesive of the present disclosure, the polymeric plasticizer has a weight average molecular weight M_{w} comprised between 10.000 and 80.000 g/mol, between 20.000 and 70.000 g/mol, between 25.000 and 65.000 g/mol, between 25.000 and 60.000 g/mol, between 30.000 and 60.000 g/mol, or even between 30.000 and 55.000 g/mol.

Advantageously, the polymeric plasticizer(s) for use herein, have a Volatile Organic Compound (VOC) value of less than 1000 ppm, less than 800 ppm, less than 600 ppm, less than 400 ppm or even less than 200 ppm, when measured by thermogravimetric analysis according to the weight loss test method described in the experimental section.

Advantageously still, the polymeric plasticizer(s) for use herein, have a Volatile Fogging Compound (FOG) value of less than 2500 ppm, less than 2000 ppm, less than 1500 ppm, less than 1000 ppm, less than 800 ppm, less than 600 ppm, or even less than 500 ppm, when measured by thermogravimetric analysis according to the weight loss test method described in the experimental section.

Yet advantageously still, the polymeric plasticizer(s) for use herein, have an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section.

According to a particularly preferred execution of the pressure sensitive adhesive of the present disclosure, the polymeric plasticizer is a polyisobutylene plasticizer. Typical examples of polyisobutylene plasticizers that can be used herein include, but are not limited to, those selected among those commercially available from BASF under the trade designation OPPANOL, in particular OPPANOL B series.

According to a typical aspect, the polymeric plasticizers are used for example in amounts of up to 40 wt%, based on the weight of the pressure sensitive adhesive. In some aspects, the polymeric plasticizers may be used in amounts up to 35 wt%, up to 30 wt%, or up to 25 wt%, based on the weight of the pressure sensitive adhesive. The amount of polymeric plasticizers can be for example, in the range of from 1 wt% to 40 wt%, from 2 wt% to 30 wt%, or even from 5 wt% to 30 wt%, or even from 5 wt% to 25 wt%, based on the weight of the pressure sensitive adhesive.

According to another typical aspect of the pressure sensitive adhesive, the total amount of the polymeric plasticizers is of no greater than 20 wt%, no greater than 18 wt%, no greater than 15 wt%, or even no greater than 12 wt%, expressed as a percent by weight based on the total weight of the pressure sensitive adhesive. In some other aspects, the total amount of the polymeric plasticizers is of no less than 6 wt%, or even no less than 7 wt%, expressed as a percent by weight based on the total weight of the pressure sensitive adhesive. In still some other aspects, the total amount of the polymeric plasticizers is comprised between 2 and 20 wt%, between 4 and 15 wt%, between 5 and 12 wt%, or even between 5 and 10 wt%, expressed as a percent by weight based on the total weight of the pressure sensitive adhesive.

The pressure sensitive adhesive according to the present disclosure further comprises at least one hydrocarbon tackifier which is primarily compatible with the rubbery blocks.

As used herein, a tackifier is "compatible" with a block if it is miscible with that block. Generally, the miscibility of a tackifier with a block can be determined by measuring the effect of the tackifier on the Tg of that block. If a tackifier is miscible with a block, it will alter (e.g., increase) the Tg of that block. A tackifier is "primarily compatible" with a block if it is at least miscible with that block, although it may also be miscible with other blocks. For example, a tackifier that is primarily compatible with a rubbery block will be miscible with the rubbery block, but may also be miscible with a glassy block. Generally, resins having relatively low solubility parameters tend to associate with the rubbery blocks. However, their solubility in the glassy blocks tends to increase as the molecular weights or softening points of these resins are lowered.

In an advantageous aspect, the hydrocarbon tackifier(s) which is primarily compatible with at least some of the rubbery blocks is primarily compatible with each rubbery block R of the multi-arm block copolymer and with the rubbery block L of the optional linear block copolymer.

Any hydrocarbon tackifiers typically included in conventional pressure-sensitive adhesive compositions may be used in the context of the present disclosure, as long as they fulfill the above-detailed compatibility requirements. Useful hydrocarbon tackifiers are typically selected to be miscible with the (co)polymeric material. Suitable hydrocarbon tackifier(s) which is primarily compatible with the rubbery blocks for use herein may be easily identified by those skilled in the art, in the light of the present disclosure.

Either solid or liquid hydrocarbon tackifiers may be added, although solid hydrocarbon tackifiers are preferred. Solid tackifiers generally have a number average molecular weight (Mw) of 10,000 grams per mole or less and a softening point above about 70°C. Liquid tackifiers are viscous materials that have a softening point of about 0°C to about 20°C.

Suitable tackifying resins may include terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the particular pressure-sensitive adhesive composition. Combinations of various tackifiers can be used if desired.

Tackifiers that are hydrocarbon resins can be prepared from various petroleum-based feed stocks. There feedstocks can be aliphatic hydrocarbons (mainly C5 monomers with some other monomers present such as a mixture of trans-1,3-pentadiene, cis-1,3-pentadiene, 2-methyl-2-butene, dicyclopentadiene, cyclopentadiene, and cyclopentene), aromatic hydrocarbons (mainly C9 monomers with some other monomers present such as a mixture of vinyl toluenes, dicyclopentadiene, indene, methylstyrene, styrene, and methylindenes), or mixtures thereof. Tackifiers derived from C5 monomers are referred to as C5-based hydrocarbon resins while those derived from C9 monomers are referred to as C9-based hydrocarbon resins. Some tackifiers are derived from a mixture of C5 and C9 monomers or are a blend of C5-based hydrocarbon tackifiers and C9-based hydrocarbon tackifiers. These tackifiers can be referred to as C5/C9-based hydrocarbon tackifiers. Any of these resins can be partially or fully hydrogenated to improve their color, their thermal stability or their process compatibility.

The C5-based hydrocarbon resins are commercially available from Eastman Chemical Company under the trade designations PICCOTAC and EASTOTAC, from Cray Valley under the trade designation WINGTACK, from Neville Chemical Company under the trade designation NEVTAC LX, and from Kolon Industries, Inc. under the trade designation HIKOREZ. The C5-based hydrocarbon resins are commercially available from Eastman Chemical with various degrees of hydrogenation under the trade designation EASTOTACK.

The C9-based hydrocarbon resins are commercially available from Eastman Chemical Company under the trade designation PICCO, KRISTALEX, PLASTOLYN, and PICCOTAC, and ENDEX, from Cray Valley under the trade designations NORSOLENE, from Ruetgers N.V. under the trade designation NOVAREZ, and from Kolon Industries, Inc. under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREZ that are 50 to 100 percent (e.g., 50 percent, 70 percent, 90 percent, and 100 percent) hydrogenated. The partially hydrogenated resins typically have some aromatic rings.

Various C5/C9-based hydrocarbon tackifiers are commercially available from Arakawa under the trade designation ARKON, from Zeon under the trade designation QUINTONE, from Exxon Mobil Chemical under the trade designation ESCOREZ, and from Newport Industries under the trade designations NURES and H-REZ (Newport Industries). In the context of the present disclosure, suitable hydrocarbon tackifiers for use herein may be advantageously selected among those C5/C9-based hydrocarbon tackifiers commercially available from Exxon Mobil Chemical under the trade designation ESCOREZ.

Exemplary hydrocarbon tackifiers that are primarily compatible with the rubbery blocks are advantageously selected from the group consisting of aliphatic hydrocarbon resins, cycloaliphatic hydrocarbon resins, aromatic modified aliphatic and cycloaliphatic resins, aromatic resins, hydrogenated hydrocarbon resins, terpene and modified terpene resins, terpene-phenol resins, rosin esters, and any combinations or mixtures thereof.

In an advantageous aspect of the present disclosure, hydrocarbon tackifiers which are primarily compatible with the rubbery blocks are selected from the group consisting of polymeric terpenes, hetero-functional terpenes, coumarone-indene resins, rosin acids, esters of rosin acids, disproportionated rosin acid esters, hydrogenated, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and any blends thereof.

According to an advantageous aspect, the hydrocarbon tackifier which is primarily compatible with the rubbery blocks has a Volatile Organic Compound (VOC) value of less than 1000 ppm, when measured by thermogravimetric analysis according to the weight loss test methods described in the experimental section.

In a particular aspect of the pressure sensitive adhesive according to the present disclosure, the hydrocarbon tackifier(s) for use herein have a Volatile Organic Compound (VOC) value of less than 800 ppm, less than 600 ppm, less than 400 ppm or even less than 200 ppm, when measured by thermogravimetric analysis according to the weight loss test method described in the experimental section.

According to a preferred aspect, the hydrocarbon tackifier(s) for use herein have a Volatile Fogging Compound (FOG) value of less than 1500 ppm, less than 1000 ppm, less than 800 ppm, less than 600 ppm, or even less than 500 ppm, when measured by thermogravimetric analysis according to the weight loss test methods described in the experimental section.

A pressure sensitive adhesive comprising a rubber-based elastomeric material and at least one hydrocarbon tackifier which is primarily compatible with the rubbery blocks, wherein the hydrocarbon tackifier(s) have a Volatile Fogging Compound (FOG) value of less than 1500 ppm, less than 1000 ppm, less than 800 ppm, less than 600 ppm, or even less than 500 ppm, when measured by thermogravimetric analysis according to the weight loss test method described in the experimental section, provide excellent characteristics and performance as to resistance of outgassed components to condensation and/or thermal stability of the corresponding pressure sensitive adhesive. Pressure sensitive adhesives provided with advantageous low fogging characteristics are particularly suited for electronic applications.

Preferably still, the hydrocarbon tackifier(s) for use herein have an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section.

A pressure sensitive adhesive comprising a rubber-based elastomeric material and at least one hydrocarbon tackifier which is primarily compatible with the rubbery blocks, wherein the hydrocarbon tackifier(s) have an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section, provide excellent thermal stability.

In some aspects of the pressure sensitive adhesive according to the present disclosure, the hydrocarbon tackifier(s) for use herein have a Tg of at least 65°C, or even at least 70°C. In some aspects, all the hydrocarbon tackifier(s) for use herein have a Tg of at least 65°C, or even at least 70°C.

In some aspects of the pressure sensitive adhesive according to the present disclosure, the hydrocarbon tackifier(s) for use herein have a softening point of at least about 115°C, or even at least about 120° C. In some aspects, all the hydrocarbon tackifier(s) for use herein have a softening point of at least about 115°C, or even at least about 120°C.

According to a typical aspect of the pressure sensitive adhesive, any of the hydrocarbon tackifiers for use herein may be used for example in amounts of up to 80 wt%, based on the weight of the pressure sensitive adhesive. In some aspects, the tackifiers for use herein can be used in amounts up to 70 wt%, up to 60 wt%, up to 55 wt%, or even up to 50 wt%, based on the weight of the pressure sensitive adhesive. The amount of tackifiers can be for example, in the range of from 5 wt% to 60 wt%, from 5 wt% to 50 wt%, from 10 wt% to 45 wt%, or even from 15 wt% to 45 wt%, based on the weight of the pressure sensitive adhesive.

According to a typical aspect, the hydrocarbon tackifier(s) which are primarily compatible with the rubbery blocks are used in amounts ranging from 20 wt% to 70 wt%, from 25 wt% to 60 wt%, or even from 25 wt% to 50 wt%, based on the weight of the pressure sensitive adhesive.

The pressure sensitive adhesive according to the present disclosure further comprises a glassy block compatible aromatic resin having a softening point value (RBSP) of at least 150°C, when measured by the ring and ball test method described in the experimental section.

In the context of the present disclosure, the expression "glassy block compatible aromatic resin" is meant to refer to an aromatic resin which is compatible with the glassy blocks, wherein the term "compatible" is as defined hereinbefore.

In an advantageous aspect, the glassy block compatible aromatic resin having a softening point value (RBSP) of at least 150°C is compatible with each glassy block G of the multi-arm block copolymer and with the glassy block G of the optional linear block copolymer.

In the context of the present disclosure, it has been surprisingly been found that the presence of a glassy block compatible aromatic resin having a softening point value (RBSP) of at least 150°C, when measured by the ring and ball test method, allows the resulting pressure sensitive adhesive to be provided with high shear strength at elevated temperatures, not only at 70°C but up to 90°C.

Any glassy block compatible aromatic resins typically included in conventional pressure-sensitive adhesive compositions may be used in the context of the present disclosure, as long as they fulfill the above-detailed softening point requirement. Glassy block compatible aromatic resins for use herein may be easily identified by those skilled in the art, in the light of the present disclosure.

According to an advantageous aspect of the pressure sensitive adhesive, the glassy block compatible aromatic resin for use herein has a softening point value (RBSP) of at least 155°C, at least 160°C, at least 165°C, at least 170°C, at least 180°C, at least 190°C or even at least 200°C, when measured by the ring and ball test method described in the experimental section.

According to another advantageous aspect of the pressure sensitive adhesive, the glassy block compatible aromatic resin for use herein has a weight average molecular weight M_{w} of 30.000 g/mol or less, of 25.000 g/mol or less, of 20.000 g/mol or less, of 15.000 g/mol or less, or even of 10.000 g/mol or less.

In a preferred aspect, the pressure sensitive adhesive according to the present disclosure comprises a glassy block compatible aromatic resin having a glass transition temperature (Tg) of at least 100°C, at least 110°C, at least 120°C, at least 130°C, at least 140°C, at least 150°C, or even at least 160°C.

According to an exemplary aspect of the pressure sensitive adhesive, the glassy block compatible aromatic resin for use herein has a weight average molecular weight M_{w} of 10.000 g/mol or less, less than 9.000 g/mol, less than 8.000 g/mol, less than 6.000 g/mol, less than 4.000 g/mol, or even less than 2.000 g/mol.

According to another exemplary aspect of the pressure sensitive adhesive, the glassy block compatible aromatic resin for use herein has a weight average molecular weight M_{w} of at least 1.000 g/mol, at least 2.000 g/mol, at least 3.000 g/mol, or even at least 4.000 g/mol.

According to still another exemplary aspect of the present disclosure, the pressure sensitive adhesive comprises a glassy block compatible aromatic resin having a weight average molecular weight M_{w} comprised between 1.000 and 9.500 g/mol, or even between 2.000 and 9.000 g/mol.

According to a typical aspect, the glassy block compatible aromatic resin for use herein is essentially a hydrocarbon aromatic resin, but the disclosure is not that limited.

In a preferred aspect of the present disclosure, the glassy block compatible aromatic resin for use herein is selected from the group consisting of hydrocarbon aromatic resins, arylene oxide resins, C9-based hydrocarbon aromatic resins, C9-based hydrogenated hydrocarbon aromatic resins, polyarylene oxide resins, in particular polyphenylene oxides or polyphenylene ethers, indene coumarone resins, aromatic resins based on copolymers of C9 with maleic anhydride, and any combinations or mixtures thereof. In still a preferred aspect, the glassy block compatible aromatic resin for use herein is selected from the group consisting of hydrocarbon aromatic resins, arylene oxide resins, and any combinations thereof.

According to an advantageous aspect of the pressure sensitive adhesive, the glassy block compatible aromatic resin for use herein is selected from the group consisting of C9-based hydrocarbon aromatic resins, C9-based hydrogenated hydrocarbon aromatic resins, polyarylene oxide resins, in particular polyphenylene oxides or polyphenylene ethers.

According to a particularly advantageous aspect of the pressure sensitive adhesive, the glassy block compatible aromatic resin for use herein is selected from the group of C9-based hydrocarbon aromatic resins.

According to another particularly advantageous aspect of the pressure sensitive adhesive, the glassy block compatible aromatic resin for use herein is selected from the group of polyphenylene oxides or polyphenylene ethers.

In a preferred aspect, the pressure sensitive adhesive according to the present disclosure comprises a glassy block compatible aromatic resin having a Volatile Organic Compound (VOC) value of less than 1000 ppm, less than 800 ppm, less than 600 ppm, less than 500 ppm, or even less than 400 ppm, when measured by thermogravimetric analysis according to the weight loss test methods described in the experimental section.

In another preferred aspect, the pressure sensitive adhesive according to the present disclosure comprises a glassy block compatible aromatic resin having a Volatile Fogging Compound (FOG) value of less than 1500 ppm, less than 1000 ppm, less than 800 ppm, less than 600 ppm, or even less than 500 ppm, when measured by thermogravimetric analysis according to the weight loss test methods described in the experimental section.

According to typical aspect, the pressure sensitive adhesive according to the present disclosure comprises a glassy block compatible aromatic resin in an amount which is of no greater than 20 wt%, no greater than 18 wt%, no greater than 15 wt%, or even no greater than 12 wt%, expressed as a percent by weight based on the total weight of the pressure sensitive adhesive.

According to another typical aspect of the pressure sensitive adhesive, the total amount of the glassy block compatible aromatic resin is of no less than 2 wt%, no less than 4 wt%, or even no less than 5 wt%, expressed as a percent by weight based on the total weight of the pressure sensitive adhesive.

According to a preferred aspect of the pressure sensitive adhesive, the total amount of glassy block compatible aromatic resin is comprised between 0.5 and 35 wt%, between 1 and 30 wt%, between 2 and 25 wt%, or even between 5 and 25 wt%, expressed as a percent by weight based on the total weight of the pressure sensitive adhesive.

In some aspects, the pressure sensitive adhesive of the present disclosure may further comprise, as an optional ingredient, a filler material. Such fillers may be advantageously used to e.g. increase the mechanical stability of the pressure sensitive adhesive and may also increase its shear and peel force resistance.

Any filler material commonly known to those skilled in the art may be used in the context of the present disclosure. Typical examples of filler material that can be used herein include, but are not limited to, those selected from the group consisting of expanded perlite, microspheres, expandable microspheres, ceramic spheres, zeolites, clay fillers, glass beads, hollow inorganic beads, silica type fillers, hydrophobic silica type fillers, hydrophilic silica type fillers, fumed silica, fibers, in particular glass fibers, carbon fibers, graphite fibers, silica fibers, ceramic fibers, electrically and/or thermally conducting particles, nanoparticles, in particular silica nanoparticles, and any combinations thereof.

In a typical aspect of the present disclosure, the pressure sensitive adhesive comprises a filler material selected from the group consisting of microspheres, expandable microspheres, preferably pentane filled expandable microspheres, gaseous cavities, glass beads, glass microspheres, glass bubbles and any combinations or mixtures thereof. More typically, the pressure sensitive adhesive may optionally comprise a filler material selected from the group consisting of expandable microspheres, glass bubbles, and any combinations or mixtures thereof.

When present, the filler material for use herein may be used in the pressure sensitive adhesive, in any suitable amounts. In some exemplary aspects, the filler material is present in amounts up to 30 parts by weight, up to 25 parts by weight, or even up to 20 parts by weight of the pressure sensitive adhesive. In some other exemplary aspects, this amount is typically of at least 1 part by weight, or at least 3 parts by weight of the pressure sensitive adhesive.

Accordingly, in some exemplary aspects, the filler material is present in amounts in a range of from 1 to 20 parts, from 3 to 15 parts by weight, or even from 5 to 13 parts by weight of the pressure sensitive adhesive. In some other exemplary aspects, the filler material is present in amounts in a range of from 1 to 20 parts, from 2 to 15 parts by weight, or even from 2 to 10 parts by weight of the pressure sensitive adhesive.

According to one particular aspect, the pressure sensitive adhesive according to the present disclosure comprises:
a) from 20 wt% to 80 wt%, from 20 wt% to 70 wt%, from 25 wt% to 60 wt%, from 30 wt% to 60 wt%, or even from 35 wt% to 60 wt% of the multi-arm block copolymer, based on the weight of the pressure sensitive adhesive;
b) from 20 wt% to 70 wt%, from 25 wt% to 60 wt%, or even from 25 wt% to 50 wt% of the hydrocarbon tackifier which is primarily compatible with the rubbery blocks, based on the weight of the pressure sensitive adhesive;
c) from 2 wt% to 20 wt%, from 4 wt% to 15 wt%, from 5 wt% to 12 wt%, or even from 5 wt% to 10 wt% of a polymeric plasticizer, based on the weight of the pressure sensitive adhesive;
d) from 0.5 to 35 wt%, from 1 to 30 wt%, from 2 to 25 wt%, or even from 5 to 25 wt% of the glassy block compatible aromatic resin;
e) optionally, from 20 wt% to 80 wt%, from 20 wt% to 70 wt%, from 25 wt% to 60 wt%, from 30 wt% to 60 wt%, or even from 35 wt% to 60 wt% of the linear block copolymer, based on the weight of the pressure sensitive adhesive; and
f) optionally, from 2 wt% to 30 wt%, from 2 wt% to 20 wt%, or even from 2 wt% to 15 wt% of a filler material preferably selected from the group of expandable microspheres and glass bubbles, based on the weight of the pressure sensitive adhesive.

As will be apparent to those skilled in the art in the light of the present disclosure, other additives may optionally be included in the pressure sensitive adhesive to achieve any desired properties. Such additives include, but are not limited to, further tackifiers, pigments, toughening agents, compatible agents, fire retardants, antioxidants, polymerization initiators, and various stabilizers. The additives are typically added in amounts sufficient to obtain the desired end properties.

According to an advantageous aspect, the pressure sensitive adhesive of the present disclosure is (substantially) free of any processing oil. According to a particular aspect, the pressure sensitive adhesive of the present disclosure is (substantially) free of mineral (hydrocarbon) oil, in particular (substantially) free of paraffinic or naphthenic oils.

According to a typical aspect, the pressure sensitive adhesive of the present disclosure is non-crosslinked. In the context of the preset disclosure, the term "non-crosslinked" is meant to express that the pressure sensitive adhesive is substantially free of chemical crosslinking caused by the use of chemical crosslinking agents and/or a treatment causing chemical crosslinking of the pressure sensitive adhesive.

According to a particular aspect of the present disclosure, the pressure sensitive adhesive is not crosslinked with actinic radiation, in particular with e-beam or UV irradiation treatment.

According to another particular aspect, the pressure sensitive adhesive of the present disclosure is (substantially) free of any crosslinking additive, in particular free of multifunctional (meth)acrylate compounds.

According to a particular aspect, the pressure sensitive adhesive of the present disclosure is a hot melt pressure sensitive adhesive. As used herein, a hot melt pressure sensitive adhesive is a polymer or blended polymeric material with a melt viscosity profile such that it can be coated on a substrate or carrier in a thin layer at a process temperature significantly above normal room temperature, but retains useful pressure-sensitive adhesive characteristics at room temperature.

According to another particular aspect, the pressure sensitive adhesive of the present disclosure is a solvent-based adhesive.

The pressure-sensitive adhesive compositions of the present disclosure can be manufactured using methods known in the art. As a way of example, they can be made by dissolving the block copolymers, suitable tackifiers, suitable aromatic resins, any plasticizer(s), and any other additives in a suitable solvent, creating a solvent-based adhesive.

The adhesive may then be coated onto a substrate (e.g., release liner, tape backing, core, or panel) using conventional means (e.g., knife coating, roll coating, gravure coating, rod coating, curtain coating, spray coating, air knife coating). In some aspects, the adhesive is then dried to remove at least some of the solvent. In some advantageous aspects, substantially all of the solvent is removed.

In some alternative executions, the pressure-sensitive adhesive is prepared in a substantially solvent-free process (i.e., the adhesive contain no greater than about 10 wt. % solvent, in some aspects, no greater than about 5 wt. % solvent, and in some aspects no greater than 1 wt. % solvent or even no greater than trace amounts of solvent (i.e., essentially no solvent). In some aspects, the pressure sensitive adhesive may contain residual solvents, e.g., adhesives may be prepared in solvent, and the solvent is removed prior to subsequent processing, e.g., coating. Generally, the residual solvent is present as no greater than about 5%, in some aspects, no greater than about 1%, or even no greater than trace amounts of solvent (i.e., essentially no solvent). Such substantially solvent-free processes are known and include, e.g., compounding by calendering or roll milling, and extruding (e.g., single. screw, twin screw, disk screw, reciprocating single screw, pin barrel single screw, etc.). Commercially available equipment such as BRABENDER or BANBURY internal mixers are also available to batch mix the adhesive compositions. After compounding, the adhesive may be coated through a die into a desired form, such as a layer of adhesive, or it may be collected for forming at a later time.

In some aspects, solvent-based adhesives may be used. In some aspects, such adhesives comprise at least about 20% by weight solvent, in some aspects, at least about 40%, at least about 50%, or even at least about 60% by weight solvent. Any known method of coating and drying solvent based adhesives may be used.

According to an advantageous aspect, the pressure sensitive adhesive according to the present disclosure is in the form of layer having a thickness of less than 1500 µm, less than 1000 µm, less than 800 µm, less than 600 µm, less than 400 µm, less than 200 µm, less than 150 µm, or even less than 100 µm. Advantageously still, the pressure sensitive adhesive is in the form of layer having a thickness comprised between 20 and 1500 µm, between 20 and 1000 µm, between 20 and 500 µm, between 30 and 400 µm, between 30 and 250 µm, between 40 and 200 µm, or even between 50 and 150 µm.

According to another advantageous aspect, the pressure sensitive adhesive according to the present disclosure is in the form of layer having a thickness comprised between 100 and 6000 µm, between 200 and 4000 µm, between 500 and 2000 µm, or even between 800 and 1500 µm.

The pressure sensitive adhesive of the present disclosure may take the form of a single layer construction, and consist essentially of a pressure sensitive adhesive layer. Such a single pressure sensitive adhesive layer can be advantageously used as double-sided adhesive tape.

According to another aspect, then present disclosure is directed to a multilayer pressure sensitive adhesive assembly comprising a pressure sensitive adhesive as described above and a backing layer adjacent to the pressure sensitive adhesive. The pressure sensitive adhesive assembly according to the present disclosure may have a design or configuration of any suitable kind, depending on its ultimate application and the desired properties, and provided it comprises at least a pressure sensitive adhesive as described above.

According to an exemplary aspect, the pressure sensitive adhesive assembly of the present disclosure may take the form of a multilayer construction comprising two or more superimposed layers, i.e. the first pressure sensitive adhesive layer and adjacent layers such as e.g. a backing layer and/or further pressure sensitive adhesive layers. Such adhesive multilayer constructions or tapes may be advantageously used as a dual-layer adhesive tape to adhere two objects to one another. In that context, suitable backing layers for use herein may or may not exhibit at least partial pressure sensitive adhesive characteristics.

Accordingly, in one particular aspect, the multilayer pressure sensitive adhesive assembly according to the present disclosure comprises a backing layer having a first major surface and a second major surface; and a first pressure sensitive adhesive skin layer bonded to the first major surface, wherein the first pressure sensitive adhesive skin layer comprises a pressure sensitive adhesive as described above.

In some other executions, the multilayer pressure sensitive adhesive assembly further comprises a second pressure sensitive adhesive skin layer bonded to the second major surface. Such a pressure sensitive adhesive assembly reflects a three-layer design, in which the backing layer may be sandwiched between e.g. two pressure sensitive adhesive layers. In some aspects of the multilayer pressure sensitive adhesive assembly, the first pressure sensitive adhesive skin layer and the second pressure sensitive adhesive skin layer are the same adhesive, and comprise a pressure sensitive adhesive as described above. In some alternative aspects, the first pressure sensitive adhesive skin layer and the second pressure sensitive adhesive skin layer each independently comprise a pressure sensitive adhesive as described above.

In some executions, the multilayer pressure sensitive adhesive assembly according to the present disclosure may advantageously be in the form of a skin/core/skin multilayer assembly, wherein the backing layer is the core layer of the multilayer pressure sensitive adhesive assembly. As used herein, the term "core" may be used interchangeably with the term "backing".

Any known backing or core may be used herein. Suitable backing layers can be made from plastics (e.g., polypropylene, including biaxially oriented polypropylene, vinyl, polyolefin e.g. polyethylene, polyurethanes, polyurethane acrylates, polyesters such as polyethylene terephthalate), nonwovens (e.g., papers, cloths, nonwoven scrims), metal foils, foams (e.g., polyacrylic, polyethylene, polyurethane, neoprene), and the like.

According to a preferred aspect of the multilayer pressure sensitive adhesive assembly according to the disclosure, the backing takes the form of a polymeric foam layer. In the context of the present disclosure, the term "polymeric foam" is meant to designate a material based on a polymer and which material comprises voids, typically in an amount of at least 5% by volume, typically from 10% to 80% by volume or from 10% to 65% by volume. The voids may be obtained by any of the known methods such as cells formed by gas. Alternatively, the voids may result from the incorporation of hollow fillers, such as hollow polymeric particles, hollow glass microspheres, hollow ceramic microspheres. According to another alternative aspect, the voids may result from the incorporation of heat expandable microspheres, preferably pentane filled expandable microspheres. The heat expandable microspheres for use herein may be expanded when the polymer melt passes an extrusion die. Polymer mixtures containing expandable microspheres may also be extruded at temperatures below their expansion temperature and expanded in a later step by exposing the tape to temperatures above the expansion temperature of the microspheres. Alternatively, the voids can result from the decomposition of chemical blowing agents.

A polymeric foam layer typically has a density comprised between 0.30 g/cm³ and 1.5 g/cm³, between 0.35 g/cm³ and 1.10 g/cm³, or even between 0.40 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or incorporation of hollow fillers, such as hollow polymeric particles, hollow glass microspheres, hollow ceramic microspheres or expandable microspheres, preferably pentane filled expandable microspheres, into the composition for the polymeric foam layer.

A polymeric foam layer for use herein has for example a thickness comprised between 100 and 6000 µm, between 200 and 4000 µm, between 500 and 2000 µm, or even between 800 and 1500 µm. As will be apparent to those skilled in the art, in the light of the present description, the preferred thickness of the polymeric foam layer will be dependent on the intended application.

In some aspects the polymeric foam layer has viscoelastic properties at room temperature. In some other aspects, the foam may comprise a thermoplastic foam. In some other aspects, the foam may comprise a thermoset foam. Exemplary foams are also described in, e.g., the Handbook of Polymer Foams, David Eaves, editor, published by Shawbury, Shrewsbury, Shropshire, UK: Rapra Technology, 2004.

Multilayer pressure sensitive adhesive assemblies comprising a backing in the form of a polymeric foam layer, are particularly advantageous when compared to single-layer pressure sensitive adhesives, in that adhesion (quick adhesion) can be adjusted by the formulation of the pressure sensitive adhesive layer (also commonly referred to as the skin layer), while other properties/requirements of the overall assembly such as application issues, deforming issues and energy distribution may be addressed by appropriate formulation of the polymeric foam layer (also commonly referred to as the core layer).

According to a typical aspect of the multilayer pressure sensitive adhesive assembly, the backing layer comprises a polymer base material selected from the group consisting of rubber-based elastomeric materials, polyacrylates, polyurethanes, polyolefins, polyamides, polyesters, polyethers, polyisobutylene, polystyrenes, polyvinyls, polyvinylpyrrolidone, and any combinations, copolymers or mixtures thereof.

In an advantageous aspect, the backing layer comprises a polymer base material selected from the group consisting of rubber-based elastomeric materials. Advantageously, the rubber-based elastomeric material is selected from the group consisting of natural rubbers, synthetic rubbers, thermoplastic elastomeric materials, non-thermoplastic elastomeric materials, thermoplastic hydrocarbon elastomeric materials, non-thermoplastic hydrocarbon elastomeric materials, and any combinations or mixtures thereof.

In some aspects of the multilayer pressure sensitive adhesive assembly, the rubber-based elastomeric material is selected from the group consisting of halogenated butyl rubbers, in particular bromobutyl rubbers and chlorobutyl rubbers; halogenated isobutylene-isoprene copolymers; bromo-isobutylene-isoprene copolymers; chloro-isobutylene-isoprene copolymers; block copolymers; olefinic block copolymers; butyl rubbers; synthetic polyisoprene; ethylene-octylene rubbers; ethylene-propylene rubbers; ethylene-propylene random copolymers; ethylene-propylene-diene monomer rubbers; polyisobutylenes; poly(alpha-olefin); ethylene-alpha-olefin copolymers; ethylene-alpha-olefin block copolymers; styrenic block copolymers; styrene-isoprene-styrene block copolymers; styrene-butadiene-styrene block copolymers; styrene-ethylene-butylene-styrene block copolymers; styrene-ethylene-propylene-styrene block copolymers; styrene-butadiene random copolymers; olefinic polymers and copolymers; ethylene-propylene random copolymers; ethylene-propylene-diene terpolymers, and any combinations or mixtures thereof.

In some preferred aspects, the rubber-based elastomeric material is selected from the group consisting of styrenic block copolymers, and any combinations or mixtures thereof. In a more preferred aspect of the multilayer pressure sensitive adhesive assembly, the rubber-based elastomeric material is selected from the group consisting of styrene-isoprene-styrene block copolymers, styrene-butadiene-styrene block copolymers, styrene-ethylene-butylene-styrene block copolymers, and any combinations or mixtures thereof.

In a still preferred aspect, the rubber-based elastomeric material is selected from the group consisting of styrene-isoprene-styrene block copolymers, styrene-butadiene-styrene block copolymers, and any combinations or mixtures thereof.

In some typical aspects, the backing layer further comprises at least one filler material which is preferably selected from the group consisting of microspheres; expandable microspheres, preferably pentane filled expandable microspheres; gaseous cavities; glass beads; glass microspheres; glass bubbles and any combinations or mixtures thereof; more preferably from the group consisting of expandable microspheres, glass bubbles, and any combinations or mixtures thereof. Preferably, the at least one filler material is selected from the group consisting of expandable microspheres, glassbubbles, and any combinations or mixtures thereof.

In some particular aspects of the pressure sensitive adhesive assembly according to the disclosure, a primer layer may be interposed between the pressure sensitive adhesive layer(s) and the backing (or core) layer. In the context of the present disclosure, any primer compositions commonly known to those skilled in the art may be used. Finding appropriate primer compositions is well within the capabilities of those skilled in the art, in the light of the present disclosure. Useful primers for use herein are described e.g. in U.S. Patent No. 5,677,376 (Groves) and U.S. Patent No. 5,605,964 (Groves), the content of which is herewith incorporated by reference.

The thickness of the various pressure sensitive adhesive layer(s) and other optional layer(s) comprised in the pressure sensitive adhesive assembly may vary in wide ranges depending on the desired execution and associated properties. By way of example, the thickness can be independently chosen for each layer between 25 µm and 6000 µm, between 40 µm and 3000 µm, between 50 µm and 3000 µm, between 50 µm and 2000 µm, or even between 50 µm and 1500 µm.

According to the particular execution wherein the multilayer pressure sensitive adhesive assembly takes the form of skin/core type multilayer pressure sensitive adhesive assembly, wherein the backing layer is the core layer of the multilayer pressure sensitive adhesive assembly and the pressure sensitive adhesive layer is the skin layer of the multilayer pressure sensitive adhesive assembly, it is preferred that the pressure sensitive adhesive layer has a lower thickness compared to the backing/core layer. This is particularly advantageous in executions where the multilayer pressure sensitive adhesive assembly takes the form of a polymeric foam pressure sensitive adhesive tape. As a way of example, the thickness of the pressure sensitive adhesive layer may typically be in the range from 20 µm to 250 µm, or even from 40 µm to 200 µm, whereas the thickness of the backing foam layer may typically be in the range from 100 µm to 6000 µm, from 400 µm to 3000 µm, or even from 800 µm to 2000 µm. Such multilayer pressure sensitive adhesive assemblies typically exhibit high peel adhesion. Without wishing to be bound by theory, it is believed such high peel adhesion is caused by a stabilizing effect of the relatively thick polymeric foam layer compared to the pressure sensitive adhesive layer.

According to a particularly advantageous aspect, the pressure sensitive adhesive as described above or the multilayer pressure sensitive adhesive assembly as described above, has a Volatile Organic Compound (VOC) value of less than 2000 ppm, less than 1500 ppm, less than 1000 ppm, less than 800 ppm, less than 600 ppm, less than 500 ppm, less than 400 ppm, or even less than 300 ppm, when measured by thermogravimetric analysis according to the weight loss test method described in the experimental section.

Advantageously still, the pressure sensitive adhesive as described above or the multilayer pressure sensitive adhesive assembly as described above, has a Volatile Organic Compound (VOC) value of less than 2000 ppm, less than 1500 ppm, less than 1000 ppm, less than 800 ppm, less than 600 ppm, less than 500 ppm, less than 400 ppm, or even less than 300 ppm, when measured by thermal desorption analysis according to test method VDA278 (Thermal Desorption Analysis of Organic Emissions for the Characterization of Non-Metallic Materials for Automobiles) from VDA, Association of the German Automobile Industry.

Advantageously still, the pressure sensitive adhesive as described above or the multilayer pressure sensitive adhesive assembly as described above, has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, or even less than 400 ppm, when measured by thermogravimetric analysis according to the weight loss test method described in the experimental section.

Advantageously still, the pressure sensitive adhesive as described above or the multilayer pressure sensitive adhesive assembly as described above, has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, or even less than 400 ppm, when measured by thermal desorption analysis according to test method VDA278 (Thermal Desorption Analysis of Organic Emissions for the Characterization of Non-Metallic Materials for Automobiles) from VDA, Association of the German Automobile Industry.

According to another advantageous execution, the pressure sensitive adhesive as described above or the multilayer pressure sensitive adhesive assembly as described above, has a static shear strength value of more than 2000 min, more than 4000 min, more than 6000 min, more than 8000 min, or even more than 10000 min, when measured at 70°C according to the static shear test method described in the experimental section.

According to still another advantageous execution, the pressure sensitive adhesive as described above or the multilayer pressure sensitive adhesive assembly as described above, has a static shear strength value of more than 2000 min, more than 4000 min, more than 6000 min, more than 8000 min, or even more than 10000 min, when measured at 90°C according to the static shear test method described in the experimental section.

The present disclosure is further directed to a method of manufacturing a pressure sensitive adhesive or a multilayer pressure sensitive adhesive assembly as described above, which comprises the step of compounding the multi-arm block copolymer, the polymeric plasticizer, the at least one hydrocarbon tackifier which is primarily compatible with the rubbery blocks, the glassy block compatible aromatic resin, and optionally, a linear block copolymer.

According to an exemplary aspect of the method according to the present disclosure, the method is a solvent-free method. By solvent-free method, it is herein meant to reflect that there is substantially no added solvent during the processing steps of the method of manufacturing the pressure sensitive adhesive.

In a particular aspect, the method of manufacturing a pressure sensitive adhesive comprises a hotmelt processing step, preferably a continuous hotmelt mixing processing step, more preferably a hotmelt extrusion processing step, in particular a twin screw hotmelt extrusion processing step.

According to an advantageous aspect of the method of manufacturing a pressure sensitive adhesive or multilayer pressure sensitive adhesive assembly, the hydrocarbon tackifier(s) and/or the polymeric plasticizer(s) and/or the aromatic resins, are exposed to minimal heat stress prior to their feeding into the compounding medium. In the context of the present disclosure, it has been indeed found that heat stress at elevated temperatures applied to the hydrocarbon tackifier(s) and/or the polymeric plasticizer(s) and/or the aromatic resin(s), for a long period of time may lead to an accelerated thermal and/or oxidative degradation of these ingredients and to the generation of VOCs.

Accordingly, in a preferred aspect of the method of manufacturing a pressure sensitive adhesive or multilayer pressure sensitive adhesive assembly, the hydrocarbon tackifier(s), the polymeric plasticizer(s) and the aromatic resin(s), are added to the compounding medium with a drum unloader as feeding equipment.

Alternatively, the hydrocarbon tackifier(s) and/or the polymeric plasticizer(s) and/or the aromatic resin(s), are fed into the compounding medium with a single screw feeding extruder. Alternatively still, the hydrocarbon tackifier(s) and/or the polymeric plasticizer(s) and/or the aromatic resin(s), are fed into the compounding medium with a kneading equipment having a discharge screw.

According to another advantageous aspect of the method of manufacturing a pressure sensitive adhesive or multilayer pressure sensitive adhesive assembly, the hydrocarbon tackifier(s) and/or the polymeric plasticizer(s) and/or the aromatic resin(s)are added into the compounding medium in a solid state by means of volumetric or gravimetric feeders.

In some particular aspects, vacuum is applied to the compounded adhesive melt during the extrusion process. Vacuum can indifferently be applied to the skin compound melt and/or to the core compound melt prior to adding the foaming agent.

According to another exemplary aspect of the method of manufacturing a pressure sensitive adhesive or multilayer pressure sensitive adhesive assembly, a chemical entrainer is added to the compounded adhesive melt and removed later in the extrusion process. Suitable entrainers for use herein are liquids, gases or compounds that release a volatile chemical substance under the action of heat. Advantageously, the used entrainer is capable of entraining further volatiles or last traces of volatiles. Suitable entrainers can be added to the skin PSA melt and or to the core melt and removed later in the extrusion process. In case the entrainer is added to the core compound, the latter is preferably removed before adding the foaming agent.

According to a particular aspect of this method of manufacturing a pressure sensitive adhesive, a precursor of the pressure sensitive adhesive layer is deposited on a substrate without being post cured.

In the context of manufacturing a multilayer pressure sensitive adhesive assembly, the various layers may be prepared separately and subsequently laminated to each other. According to an alternative exemplary aspect, corresponding precursors of the various layers may be prepared as part of a single process step.

However, the production of the pressure sensitive adhesive and the multilayer pressure sensitive adhesive assembly is not limited to the before mentioned methods. Alternative preparation methods may be easily identified by those skilled in the art, in the light of the present disclosure. As a way of example, the pressure sensitive adhesive or the multilayer pressure sensitive adhesive assembly may be produced by solvent-based methods.

According to another aspect of the present disclosure, it is provided a method of manufacturing a pressure sensitive adhesive according or a multilayer pressure sensitive adhesive assembly as described above, which comprises the steps of:
a) dissolving the multi-arm block copolymer, the polymeric plasticizer, the at least one hydrocarbon tackifier which is primarily compatible with the rubbery blocks, the glassy block compatible aromatic resin, and optionally, a linear block copolymer, in an organic solvent, thereby forming a solution of a pressure sensitive adhesive; and
b) removing the organic solvent.

The pressure sensitive adhesive of the present disclosure can be coated/applied upon a variety of substrates to produce adhesive-coated articles. The substrates can be flexible or inflexible and be formed of a polymeric material, paper, glass or ceramic material, metal, or combinations thereof. Suitable polymeric substrates include, but are not limited to, polymeric films such as those prepared from polypropylene, polyethylene, polyvinyl chloride, polyester (polyethylene terephthalate or polyethylene naphthalate), polycarbonate, polymethyl(meth)acrylate (PMMA), cellulose acetate, cellulose triacetate, ethyl cellulose, and polyurethane. Foam backings may be used. Examples of other substrates include, but are not limited to, metal such as stainless steel, metal or metal oxide coated polymeric material, metal or metal oxide coated glass, and the like.

Regardless of the method of manufacturing used, the method is typically free of any crosslinking step, in particular a crosslinking step induced with actinic radiation, more in particular with e-beam or UV irradiation.

The pressure sensitive adhesives of the present disclosure may be used in any conventionally known article such as labels, tapes, signs, covers, marking indices, display components, touch panels, and the like. Flexible backing materials having microreplicated surfaces are also contemplated.

The pressure sensitive adhesives may be coated/applied on a substrate using any conventional coating techniques modified as appropriate to the particular substrate. For example, pressure sensitive adhesives may be applied/coated to a variety of solid substrates by methods such as roller coating, flow coating, dip coating, spin coating, spray coating knife coating, and die coating. These various methods of coating allow the pressure sensitive adhesives to be placed on the substrate at variable thicknesses thus allowing a wider range of use of the assemblies.

The substrate to which the pressure sensitive adhesive may be applied is selected depending on the particular application. For example, the pressure sensitive adhesive, in particular via its second and/or third pressure sensitive adhesive layer may be applied to sheeting products (e.g., decorative graphics and reflective products), label stock, and tape backings. Additionally, the pressure sensitive adhesive may be applied directly onto other substrates such as a metal panel (e.g., automotive panel) or a glass window so that yet another substrate or object can be attached to the panel or window. Accordingly, the pressure sensitive adhesive of the present disclosure may find a particular use in the automotive manufacturing industry (e.g. for attachment of exterior trim parts or for weatherstrips), in the construction industry, in the solar panel construction industry, or in the electronic industry (e.g. for the fixation of displays in mobile hand held devices)

As such, the pressure sensitive adhesives according to the present disclosure are particularly suited for (industrial) interior applications, more in particular for construction market applications, automotive applications or electronic applications. In the context of automotive applications, the pressure sensitive adhesives as described herein may find particular use for adhering e.g. automotive body side mouldings, weather strips or rearview mirrors. The pressure sensitive adhesives according to the present disclosure are particularly suitable for adhesion to substrates/panels painted with automotive paint systems comprising a base electrocoat or a pigmented basecoat, and in particular to clear coat surfaces, in particular clear coats for automotive vehicles. The pressure sensitive adhesives according to the present disclosure are particularly suited for adhesion to low energy surfaces, such as polypropylene, polyethylene or copolymers thereof.

The present disclosure is further directed to a method of adhering a pressure sensitive adhesive to an oil contaminated substrate, comprising the steps of:
a) providing a pressure sensitive adhesive or a multilayer pressure sensitive adhesive assembly as described above; and
b) adhesively contacting the pressure sensitive adhesive or a multilayer pressure sensitive adhesive assembly to the oil contaminated substrate.

In the context of the present disclosure, it has been surprisingly discovered that the pressure sensitive adhesive as described herein provides excellent peel performance on oil contaminated substrates, in particular mineral oil contaminated substrates. Oil contaminated substrates are often encountered in industrial and automotive manufacturing environments and typically have to be thoroughly cleaned prior to adhesive or adhesive tape applications. Typically used cleaning agents are organic solvents. Owing to its excellent peel performance on oil contaminated substrates, the pressure sensitive adhesives as described herein may be adhesively contacted directly on oil contaminated substrates without requiring pre-cleaning of the contaminated substrates. In some particular aspects, the pressure sensitive adhesives as described herein may be adhesively contacted directly on oil contaminated substrates having an oil contamination up to 3 g/m².

According to advantageous aspect, the method of adhering a pressure sensitive adhesive to an oil contaminated substrate is free of a step consisting of pre-cleaning the oil contaminated substrate before the step of adhesively contacting the pressure sensitive adhesive or a multilayer pressure sensitive adhesive assembly to the oil contaminated substrate.

According to a further aspect of the present disclosure, it is provided a method of printing a pressure sensitive adhesive onto a substrate, comprising the steps of:
a) compounding the multi-arm block copolymer, the polymeric plasticizer, the at least one hydrocarbon tackifier which is primarily compatible with the rubbery blocks, the glassy block compatible aromatic resin, and optionally, a linear block copolymer, as described above, thereby forming a hotmelt pressure sensitive adhesive composition;
b) placing the hotmelt pressure sensitive adhesive composition in a hotmelt dispensing device; and
c) dispensing the hotmelt pressure sensitive adhesive composition from the hotmelt dispensing device onto the substrate.

According to an alternative aspect, the hotmelt pressure sensitive adhesive composition may be dispensed from the hotmelt dispensing device onto a suitable release liner. The printed pressure sensitive adhesive product can then be applied from the liner to a substrate to bond by simple lamination and removal of the top liner.

In the context of the present disclosure, it has been surprisingly discovered that the pressure sensitive adhesive in the form of a hotmelt adhesive as described herein may be directly printed or plotted onto a substrate, without requiring any post crosslinking step to achieve a suitable holding stability. The hotmelt pressure sensitive adhesive as described herein may therefore be used for the manufacturing of pressure sensitive adhesive products having complex shapes simply by printing the hotmelt composition. This is in clear contrast with the commonly known method of producing pressure sensitive adhesive products having complex shapes, which typically require converting large rolls of post crosslinked pressure sensitive adhesives into desired pressure sensitive adhesive products by slitting, die cutting, stamping, and which is very often associated with the generation of substantial waste. As a way of example, the stamping of pressure sensitive adhesive seals typically used for bonding cell phone screens, produce up to 95% of waste as only 5% of the produced pressure sensitive adhesive is used out of the jumbo rolls.

According to another aspect, the present disclosure is directed to the use of a pressure sensitive adhesive or a multilayer pressure sensitive adhesive assembly as described above for industrial applications, preferably for interior (industrial) applications, more preferably for construction market applications, automotive applications or electronic applications.

In some aspects, the pressure sensitive adhesive or the multilayer pressure sensitive adhesive assembly according to the present disclosure may be particularly useful for forming strong adhesive bonds to low surface energy (LSE) substrates.

However, the use of these adhesives is not limited to low surface energy substrates. The pressure sensitive adhesives and multilayer pressure sensitive adhesive assemblies may, in some aspects, surprisingly bond well to medium surface energy (MSE) substrates. Included among such materials are polyamide 6 (PA6), acrylonitrile butadiene styrene (ABS), PC/ABS blends, PC, PVC, PA, polyurethane, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

According to still another aspect, the present disclosure is directed to the use of a pressure sensitive adhesive or a multilayer pressure sensitive adhesive assembly as described above for adhering to an oil contaminated substrate.

According to still another aspect, the present disclosure is directed to the use of a pressure sensitive adhesive or a multilayer pressure sensitive adhesive assembly as described above for pressure sensitive adhesive printing, in particular for hotmelt printing of a pressure sensitive adhesive.
Item 1 is a pressure sensitive adhesive comprising:
   a) a multi-arm block copolymer of the formula Qₙ-Y, wherein:
      (i) Q represents an arm of the multi-arm block copolymer and each arm independently has the formula G-R,
      (ii) n represents the number of arms and is a whole number of at least 3, and
      (iii) Y is the residue of a multifunctional coupling agent,
         wherein each R is a rubbery block comprising a polymerized conjugated diene, a hydrogenated derivative of a polymerized conjugated diene, or combinations thereof; and each G is a glassy block comprising a polymerized monovinyl aromatic monomer;
   b) a polymeric plasticizer having a weight average molecular weight M_{w} comprised between 10.000 and 100.000 g/mol;
   c) at least one hydrocarbon tackifier which is primarily compatible with the rubbery blocks;
   d) a glassy block compatible aromatic resin having a softening point value (RBSP) of at least 150°C, when measured by the ring and ball test method described in the experimental section; and
   e) optionally, a linear block copolymer of the formula L-(G)ₘ, wherein L is a rubbery block comprising a polymerized olefin, a polymerized conjugated diene, a hydrogenated derivative of a polymerized conjugated diene, or any combinations thereof; and wherein m is 1 or 2.
Item 2 is a pressure sensitive adhesive according to item 1, wherein the glassy block compatible aromatic resin has a weight average molecular weight M_{w} of 30.000 g/mol or less, of 25.000 g/mol or less, of 20.000 g/mol or less, of 15.000 g/mol or less, or even of 10.000 g/mol or less.
Item 3 is a pressure sensitive adhesive according to item 1 or 2, wherein the glassy block compatible aromatic resin has a softening point value (RBSP) of at least 155°C, at least 160°C, at least 165°C, at least 170°C, at least 180°C, at least 190°C or even at least 200°C, when measured by the ring and ball test method described in the experimental section.
Item 4 is a pressure sensitive adhesive according to any of the preceding items, wherein the glassy block compatible aromatic resin has a glass transition temperature (Tg) of at least 100°C, at least 110°C, at least 120°C, at least 130°C, at least 140°C, at least 150°C, or even at least 160°C.
Item 5 is a pressure sensitive adhesive according to any of the preceding items, wherein the glassy block compatible aromatic resin has a weight average molecular weight M_{w} of 10.000 g/mol or less, less than 9.000 g/mol, less than 8.000 g/mol, less than 6.000 g/mol, less than 4.000 g/mol, or even less than 2.000 g/mol.
Item 6 is a pressure sensitive adhesive according to any of the preceding items, wherein the glassy block compatible aromatic resin has a weight average molecular weight M_{w} of at least 1.000 g/mol, at least 2.000 g/mol, at least 3.000 g/mol, or even at least 4.000 g/mol.
Item 7 is a pressure sensitive adhesive according to any of the preceding items, wherein the glassy block compatible aromatic resin has a weight average molecular weight M_{w} comprised between 1.000 and 9.500 g/mol, or even between 2.000 and 9.000 g/mol.
Item 8 is a pressure sensitive adhesive according to any of the preceding items, wherein the glassy block compatible aromatic resin is essentially a hydrocarbon aromatic resin.
Item 9 is a pressure sensitive adhesive according to item 8, wherein the glassy block compatible aromatic resin is selected from the group consisting of hydrocarbon aromatic resins, arylene oxide resins, C9-based hydrocarbon aromatic resins, C9-based hydrogenated hydrocarbon aromatic resins, polyarylene oxide resins, in particular polyphenylene oxides or polyphenylene ethers, indene coumarone resins, aromatic resins based on copolymers of C9 with maleic anhydride, and any combinations or mixtures thereof.
Item 10 is a pressure sensitive adhesive according to any of the preceding items, wherein the glassy block compatible aromatic resin is selected from the group consisting of hydrocarbon aromatic resins, arylene oxide resins, and any combinations thereof.
Item 11 is a pressure sensitive adhesive according to any of the preceding items, wherein the glassy block compatible aromatic resin is selected from the group consisting of C9-based hydrocarbon aromatic resins, C9-based hydrogenated hydrocarbon aromatic resins, polyarylene oxide resins, in particular polyphenylene oxides or polyphenylene ethers.
Item 12 is a pressure sensitive adhesive according to any of the preceding items, wherein the glassy block compatible aromatic resin is selected from the group of C9-based hydrocarbon aromatic resins.
Item 13 is a pressure sensitive adhesive according to any of items 1 to 12, wherein the glassy block compatible aromatic resin is selected from the group of polyphenylene oxides or polyphenylene ethers.
Item 14 is a pressure sensitive adhesive according to any of the preceding items, wherein the glassy block compatible aromatic resin has a Volatile Organic Compound (VOC) value of less than 1000 ppm, less than 800 ppm, less than 600 ppm, less than 500 ppm, or even less than 400 ppm, when measured by thermogravimetric analysis according to the weight loss test methods described in the experimental section.
Item 15 is a pressure sensitive adhesive according to any of the preceding items, wherein the glassy block compatible aromatic resin has a Volatile Fogging Compound (FOG) value of less than 1500 ppm, less than 1000 ppm, less than 800 ppm, less than 600 ppm, or even less than 500 ppm, when measured by thermogravimetric analysis according to the weight loss test methods described in the experimental section.
Item 16 is a pressure sensitive adhesive according to any of the preceding items, wherein the polymeric plasticizer has a weight average molecular weight of less than 95.000 g/mol, less than 90.000 g/mol, less than 80.000 g/mol, less than 70.000 g/mol, less than 60.000 g/mol, less than 50.000 g/mol, or even less than 40.000 g/mol.
Item 17 is a pressure sensitive adhesive according to any of the preceding items, wherein the polymeric plasticizer has a weight average molecular weight M_{w} of at least 15.000 g/mol, at least 20.000 g/mol, or even at least 30.000 g/mol.
Item 18 is a pressure sensitive adhesive according to any of the preceding items, wherein the polymeric plasticizer has a weight average molecular weight M_{w} comprised between 10.000 and 80.000 g/mol, between 20.000 and 70.000 g/mol, between 25.000 and 65.000 g/mol, between 25.000 and 60.000 g/mol, between 30.000 and 60.000 g/mol, or even between 30.000 and 55.000 g/mol.
Item 19 is a pressure sensitive adhesive according to any of the preceding items, wherein the polymeric plasticizer has a Volatile Organic Compound (VOC) value of less than 1000 ppm, less than 800 ppm, less than 600 ppm, less than 400 ppm or even less than 200 ppm, when measured by thermogravimetric analysis according to the weight loss test methods described in the experimental section.
Item 20 is a pressure sensitive adhesive according to any of the preceding items, wherein the polymeric plasticizer has a Volatile Fogging Compound (FOG) value of less than 2500 ppm, less than 2000 ppm, less than 1500 ppm, less than 1000 ppm, less than 800 ppm, less than 600 ppm, or even less than 500 ppm, when measured by thermogravimetric analysis according to the weight loss test method described in the experimental section.
Item 21 is a pressure sensitive adhesive according to any of the preceding items, wherein the polymeric plasticizer has an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section.
Item 22 is a pressure sensitive adhesive according to any of the preceding items, wherein the polymeric plasticizer is a polyisobutylene plasticizer.
Item 23 is a pressure sensitive adhesive according to any one of the preceding items, wherein the hydrocarbon tackifier which is primarily compatible with the rubbery blocks is selected from the group consisting of polymeric terpenes, hetero-functional terpenes, coumarone-indene resins, esters of rosin acids, disproportionated rosin acid esters, hydrogenated rosin acids, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and blends thereof.
Item 24 is a pressure sensitive adhesive according to any of the preceding items, wherein the hydrocarbon tackifier which is primarily compatible with the rubbery blocks has a Volatile Organic Compound (VOC) value of less than 1000 ppm, when measured by thermogravimetric analysis according to the weight loss test methods described in the experimental section.
Item 25 is a pressure sensitive adhesive according to any of the preceding items, wherein the hydrocarbon tackifier which is primarily compatible with the rubbery blocks has a Volatile Organic Compound (VOC) value of less than 800 ppm, less than 600 ppm, less than 400 ppm or even less than 200 ppm, when measured by thermogravimetric analysis according to the weight loss test method described in the experimental section.
Item 26 is a pressure sensitive adhesive according to any of the preceding items, wherein the hydrocarbon tackifier which is primarily compatible with the rubbery blocks has a Volatile Fogging Compound (FOG) value of less than 1500 ppm, less than 1000 ppm, less than 800 ppm, less than 600 ppm, or even less than 500 ppm, when measured by thermogravimetric analysis according to the weight loss test methods described in the experimental section.
Item 27 is a pressure sensitive adhesive according to any of the preceding items, wherein the hydrocarbon tackifier which is primarily compatible with the rubbery blocks has an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section.
Item 28 is a pressure sensitive adhesive according to any of the preceding items, wherein the multi-arm block copolymer is a star block copolymer.
Item 29 is a pressure sensitive adhesive according to item 28, wherein the multi-arm block copolymer is a polymodal, asymmetric star block copolymer.
Item 30 is a pressure sensitive adhesive according to any one of the preceding items, wherein at least one of the rubbery blocks of the multi-arm block copolymer comprises a conjugated diene selected from the group consisting of isoprene, butadiene, ethylene butadiene copolymers, and any combinations thereof, preferably wherein each of the rubbery blocks of the multi-arm block copolymer comprises a conjugated diene selected from the group consisting of isoprene, butadiene, ethylene butadiene copolymers, and any combinations thereof.
Item 31 is a pressure sensitive adhesive according to any one of the preceding items, wherein at least one of the rubbery blocks of the multi-arm block copolymer comprises a conjugated diene selected from the group consisting of isoprene, butadiene, and any combinations thereof, preferably wherein each of the rubbery blocks of the multi-arm block copolymer comprises a conjugated diene selected from the group consisting of isoprene, butadiene, and any combinations thereof.
Item 32 is a pressure sensitive adhesive according to any one of the preceding items, wherein at least one of the glassy blocks of the multi-arm block copolymer is a monovinyl aromatic monomer selected from the group consisting of styrene, styrene-compatible blends, and any combinations thereof, preferably wherein each of the glassy blocks of the multi-arm block copolymer is a monovinyl aromatic monomer selected from the group consisting of styrene, styrene-compatible blends, and any combinations thereof.
Item 33 is a pressure sensitive adhesive according to any one of the preceding items, wherein at least one arm of the multi-arm block copolymer is selected from the group consisting of styrene-isoprene-styrene, styrene-butadiene-styrene, styrene-ethylene-butadiene-styrene, and combinations thereof, preferably wherein each arm of the multi-arm block copolymer is selected from the group consisting of styrene-isoprene-styrene, styrene-butadiene-styrene, styrene-ethylene-butadiene-styrene, and any combinations thereof.
Item 34 is a pressure sensitive adhesive according to any one of the preceding items, wherein at least one arm of the multi-arm block copolymer is a styrene-isoprene-styrene block copolymer, preferably wherein each arm of the multi-arm block copolymer is a styrene-isoprene-styrene block copolymer.
Item 35 is a pressure sensitive adhesive according to any one of the preceding items, wherein the number of arms of the multi-arm block copolymer, n, is a whole number from 3 to 5, inclusive, preferably wherein n is 4.
Item 36 is a pressure sensitive adhesive according to any of the preceding items, wherein the rubbery block of the linear block copolymer comprises a conjugated diene selected from the group consisting of isoprene, butadiene, ethyl butadiene copolymers, and any combinations thereof.
Item 37 is a pressure sensitive adhesive according to any of the preceding items, wherein the rubbery block of the linear block copolymer comprises a conjugated diene selected from the group consisting of isoprene, butadiene, and any combinations thereof.
Item 38 is a pressure sensitive adhesive according to any one of the preceding items, wherein at least one glassy block of the linear block copolymer is a mono vinyl aromatic monomer selected from the group consisting of styrene, styrene-compatible blends, and any combinations thereof.
Item 39 is a pressure sensitive adhesive according to any one of the preceding items, wherein the linear block copolymer comprises two glassy blocks.
Item 40 is a pressure sensitive adhesive according to any one of the preceding items, wherein the linear block copolymer is selected from the group consisting of styrene-isoprene-styrene, styrene-butadiene-styrene, styrene-ethylene-butadiene-styrene, and any combinations thereof.
Item 41 is a pressure sensitive adhesive according to any one of the preceding items, wherein the linear block copolymer is a styrene-isoprene-styrene block copolymer.
Item 42 is a pressure sensitive adhesive according to any one of the preceding items, wherein the total amount of the glassy block compatible aromatic resin is of no greater than 20 wt%, no greater than 18 wt%, no greater than 15 wt%, or even no greater than 12 wt%, expressed as a percent by weight based on the total weight of the pressure sensitive adhesive.
Item 43 is a pressure sensitive adhesive according to any one of the preceding items, wherein the total amount of the glassy block compatible aromatic resin is of no less than 2 wt%, no less than 4 wt%, or even no less than 5 wt%, expressed as a percent by weight based on the total weight of the pressure sensitive adhesive.
Item 44 is a pressure sensitive adhesive according to any one of the preceding items, wherein the total amount of glassy block compatible aromatic resin is comprised between 0.5 and 35 wt%, between 1 and 30 wt%, between 2 and 25 wt%, or even between 5 and 25 wt%, expressed as a percent by weight based on the total weight of the pressure sensitive adhesive.
Item 45 is a pressure sensitive adhesive according to any one of the preceding items, wherein the total amount of the polymeric plasticizer is of no greater than 20 wt%, no greater than 18 wt%, no greater than 15 wt%, or even no greater than 12 wt%, expressed as a percent by weight based on the total weight of the pressure sensitive adhesive.
Item 46 is a pressure sensitive adhesive according to any one of the preceding items, wherein the total amount of the polymeric plasticizer is of no less than 2 wt%, no less than 4 wt%, or even no less than 6 wt%, expressed as a percent by weight based on the total weight of the pressure sensitive adhesive.
Item 47 is a pressure sensitive adhesive according to any one of the preceding items, wherein the total amount of the polymeric plasticizer is comprised between 2 and 20 wt%, between 4 and 15 wt%, between 5 and 12 wt%, between 5 and 10 wt%, or even between 5 and 8 wt%, expressed as a percent by weight based on the total weight of the pressure sensitive adhesive.
Item 48 is a pressure sensitive adhesive according to any one of the preceding items, which comprises:
   a) from 20 wt% to 80 wt%, from 20 wt% to 70 wt%, from 25 wt% to 60 wt%, from 30 wt% to 60 wt%, or even from 35 wt% to 60 wt% of the multi-arm block copolymer, based on the weight of the pressure sensitive adhesive;
   b) from 20 wt% to 70 wt%, from 25 wt% to 60 wt%, or even from 25 wt% to 50 wt% of the hydrocarbon tackifier which is primarily compatible with the rubbery blocks, based on the weight of the pressure sensitive adhesive;
   c) from 2 wt% to 20 wt%, from 4 wt% to 15 wt%, from 5 wt% to 12 wt%, or even from 5 wt% to 10 wt% of a polymeric plasticizer, based on the weight of the pressure sensitive adhesive;
   d) from 0.5 to 35 wt%, from 1 to 30 wt%, from 2 to 25 wt%, or even from 5 to 25 wt% of the glassy block compatible aromatic resin;
   e) optionally, from 20 wt% to 80 wt%, from 20 wt% to 70 wt%, from 25 wt% to 60 wt%, from 30 wt% to 60 wt%, or even from 35 wt% to 60 wt% of the linear block copolymer, based on the weight of the pressure sensitive adhesive; and
   f) optionally, from 2 wt% to 30 wt%, from 2 wt% to 20 wt%, or even from 2 wt% to 15 wt% of a filler material preferably selected from the group of expandable microspheres and glass bubbles, based on the weight of the pressure sensitive adhesive.
Item 49 is a pressure sensitive adhesive according to any one of the preceding items, which is non-crosslinked, in particular not crosslinked with actinic radiation, more in particular with e-beam or UV irradiation.
Item 50 is a pressure sensitive adhesive according to any one of the preceding items, which is free of any crosslinking additive, in particular free of multifunctional (meth)acrylate compounds.
Item 51 is a pressure sensitive adhesive according to any one of the preceding items, which is free of processing oil, in particular mineral (hydrocarbon) oil.
Item 52 is a pressure sensitive adhesive according to any one of the preceding items, which is a hot melt adhesive.
Item 53 is a pressure sensitive adhesive according to any one of the preceding items, which is a solvent-based adhesive.
Item 54 is a pressure sensitive adhesive according to any one of the preceding items, in the form of layer having a thickness comprised between 20 and 1500 µm, between 20 and 1000 µm, between 20 and 500 µm, between 30 and 400 µm, between 30 and 250 µm, between 40 and 200 µm, or even between 50 and 150 µm.
Item 55 is a pressure sensitive adhesive according to any of the preceding items, in the form of layer having a thickness comprised between 100 and 6000 µm, between 200 and 4000 µm, between 500 and 2000 µm, or even between 800 and 1500 µm.
Item 56 is a multilayer pressure sensitive adhesive assembly comprising a pressure sensitive adhesive according to any of the preceding items and a backing layer adjacent to the pressure sensitive adhesive.
Item 57 is a multilayer pressure sensitive adhesive assembly according to item 56, comprising a backing layer having a first major surface and a second major surface; and a first pressure sensitive adhesive skin layer bonded to the first major surface, wherein the first pressure sensitive adhesive skin layer comprises a pressure sensitive adhesive according to any of items 1 to 55.
Item 58 is a multilayer pressure sensitive adhesive assembly according to item 57, which further comprises a second pressure sensitive adhesive skin layer bonded to the second major surface.
Item 59 is a multilayer pressure sensitive adhesive assembly according to item 58, wherein the first pressure sensitive adhesive skin layer and the second pressure sensitive adhesive layer are the same adhesive.
Item 60 is a multilayer pressure sensitive adhesive assembly according to item 58, wherein the first pressure sensitive adhesive skin layer and the second pressure sensitive adhesive layer each independently comprise a pressure sensitive adhesive according to any one of items 1 to 55.
Item 61 is a multilayer pressure sensitive adhesive assembly according to any of items 58 to 60, which is in the form of a skin/core/skin multilayer pressure sensitive adhesive assembly, wherein the backing layer is the core layer of the multilayer pressure sensitive adhesive assembly.
Item 62 is a multilayer pressure sensitive adhesive assembly according to any of items 56 to 61, wherein the backing layer comprise a pressure sensitive adhesive according to any one of items 1 to 54.
Item 63 is a multilayer pressure sensitive adhesive assembly according to any of items 56 to 62, wherein the backing is a foam backing.
Item 64 is a multilayer pressure sensitive adhesive assembly according to any of items 56 to 63, wherein the backing layer comprises a polymer base material selected from the group consisting of rubber-based elastomeric materials, polyacrylates, polyurethanes, polyolefins, polyamines, polyamides, polyesters, polyethers, polyisobutylene, polystyrenes, polyvinyls, polyvinylpyrrolidone, and any combinations, copolymers or mixtures thereof.
Item 65 is a multilayer pressure sensitive adhesive assembly according to item 64, wherein the backing layer comprises a polymer base material selected from the group consisting of rubber-based elastomeric materials.
Item 66 is a multilayer pressure sensitive adhesive assembly according to item 65, wherein the rubber-based elastomeric material is selected from the group consisting of natural rubbers, synthetic rubbers, thermoplastic elastomeric materials, non-thermoplastic elastomeric materials, thermoplastic hydrocarbon elastomeric materials, non-thermoplastic hydrocarbon elastomeric materials, and any combinations or mixtures thereof.
Item 67 is a multilayer pressure sensitive adhesive assembly according to any of item 64 or 65, wherein the rubber-based elastomeric material is selected from the group consisting of halogenated butyl rubbers, in particular bromobutyl rubbers and chlorobutyl rubbers; halogenated isobutylene-isoprene copolymers; bromo-isobutylene-isoprene copolymers; chloro-isobutylene-isoprene copolymers; block copolymers; olefinic block copolymers; butyl rubbers; synthetic polyisoprene; ethylene-octylene rubbers; ethylene-propylene rubbers; ethylene-propylene random copolymers; ethylene-propylene-diene monomer rubbers; polyisobutylenes; poly(alpha-olefin); ethylene-alpha-olefin copolymers; ethylene-alpha-olefin block copolymers; styrenic block copolymers; styrene-isoprene-styrene block copolymers; styrene-butadiene-styrene block copolymers; styrene-ethylene/butadiene-styrene block copolymers; styrene-ethylene/propylene-styrene block copolymers; styrene-butadiene random copolymers; olefinic polymers and copolymers; ethylene-propylene random copolymers; ethylene-propylene-diene terpolymers, and any combinations or mixtures thereof.
Item 68 is a multilayer pressure sensitive adhesive assembly according to any of items 65 to 67, wherein the rubber-based elastomeric material is selected from the group consisting of styrene-isoprene-styrene block copolymers, styrene-butadiene-styrene block copolymers, styrene-ethylene-butadiene-styrene block copolymers, and any combinations or mixtures thereof.
Item 69 is a multilayer pressure sensitive adhesive assembly according to any of items 65 to 67, wherein the rubber-based elastomeric material is selected from the group consisting of styrene-isoprene-styrene block copolymers, styrene-butadiene-styrene block copolymers, and any combinations or mixtures thereof.
Item 70 is a multilayer pressure sensitive adhesive assembly according to any of items 56 to 69, wherein the backing layer further comprises at least one filler material which is preferably selected from the group consisting of microspheres; expandable microspheres, preferably pentane filled expandable microspheres; gaseous cavities; glass beads; glass microspheres; glass bubbles and any combinations or mixtures thereof; more preferably from the group consisting of expandable microspheres, glass bubbles, and any combinations or mixtures thereof.
Item 71 is a multilayer pressure sensitive adhesive assembly according to item 70, wherein the at least one filler material is selected from the group consisting of expandable microspheres, glassbubbles, and any combinations or mixtures thereof.
Item 72 is a pressure sensitive adhesive or a multilayer pressure sensitive adhesive assembly according to any of the preceding items, which has a Volatile Organic Compound (VOC) value of less than 2000 ppm, less than 1500 ppm, less than 1000 ppm, less than 800 ppm, less than 600 ppm, less than 500 ppm, less than 400 ppm, or even less than 300 ppm, when measured by thermogravimetric analysis according to the weight loss test method described in the experimental section.
Item 73 is a pressure sensitive adhesive or a multilayer pressure sensitive adhesive assembly according to any of the preceding items, which has a Volatile Organic Compound (VOC) value of less than 2000 ppm, less than 1500 ppm, less than 1000 ppm, less than 800 ppm, less than 600 ppm, less than 500 ppm, less than 400 ppm, or even less than 300 ppm, when measured by thermal desorption analysis according to test method VDA278.
Item 74 is a pressure sensitive adhesive or a multilayer pressure sensitive adhesive assembly according to any of the preceding items, which has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, or even less than 400 ppm, when measured by thermogravimetric analysis according to the weight loss test method described in the experimental section.
Item 75 is a pressure sensitive adhesive or a multilayer pressure sensitive adhesive assembly according to any of the preceding items, which has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, or even less than 400 ppm, when measured by thermal desorption analysis according to test method VDA278.
Item 76 is a pressure sensitive adhesive or a multilayer pressure sensitive adhesive assembly according to any of the preceding items, which has a static shear strength value of more than 2000 min, more than 4000 min, more than 6000 min, more than 8000 min, or even more than 10000 min, when measured at 70°C according to the static shear test method described in the experimental section.
Item 77 is a pressure sensitive adhesive or a multilayer pressure sensitive adhesive assembly according to any of the preceding items, which has a static shear strength value of more than 2000 min, more than 4000 min, more than 6000 min, more than 8000 min, or even more than 10000 min, when measured at 90°C according to the static shear test method described in the experimental section.
Item 78 is a method of manufacturing a pressure sensitive adhesive according to any of items 1 to 53 or a multilayer pressure sensitive adhesive assembly according to any of items 56 to 77, which comprises the step of compounding the multi-arm block copolymer, the polymeric plasticizer, the at least one hydrocarbon tackifier which is primarily compatible with the rubbery blocks, the glassy block compatible aromatic resin, and optionally, a linear block copolymer.
Item 79 is a method according to item 78, which is a solvent-free method.
Item 80 is a method according to any of item 78 or 79, which comprises a hotmelt processing step, preferably a continuous hotmelt mixing processing step, more preferably a hotmelt extrusion processing step, in particular a twin screw hotmelt extrusion processing step.
Item 81 is a method of manufacturing a pressure sensitive adhesive according to any of items 1 to 55 or a multilayer pressure sensitive adhesive assembly according to any of items 56 to 77, which comprises the steps of:
   a) dissolving the multi-arm block copolymer, the polymeric plasticizer, the at least one hydrocarbon tackifier which is primarily compatible with the rubbery blocks, the glassy block compatible aromatic resin, and optionally, a linear block copolymer, in an organic solvent, thereby forming a solution of a pressure sensitive adhesive; and
   b) removing the organic solvent.
Item 82 is a method according to any of items 78 to 81, which is free of any crosslinking step, in particular crosslinking step with actinic radiation, more in particular with e-beam or UV irradiation.
Item 83 is a method of adhering a pressure sensitive adhesive to an oil contaminated substrate, comprising the steps of:
   a) providing a pressure sensitive adhesive or a multilayer pressure sensitive adhesive assembly according to any of items 1 to 77; and
   b) adhesively contacting the pressure sensitive adhesive or a multilayer pressure sensitive adhesive assembly to the oil contaminated substrate.
Item 84 is a method according to item 83, which is free of a step consisting of pre-cleaning the oil contaminated substrate before the step of adhesively contacting the pressure sensitive adhesive or a multilayer pressure sensitive adhesive assembly to the oil contaminated substrate.
Item 85 is a method of printing a pressure sensitive adhesive onto a substrate, comprising the steps of:
   a) compounding the multi-arm block copolymer, the polymeric plasticizer, the at least one hydrocarbon tackifier which is primarily compatible with the rubbery blocks, the glassy block compatible aromatic resin, and optionally, a linear block copolymer, as described in any of items 1 to 55, thereby forming a hotmelt pressure sensitive adhesive composition;
   b) placing the hotmelt pressure sensitive adhesive composition in a hotmelt dispensing device; and
   c) dispensing the hotmelt pressure sensitive adhesive composition from the hotmelt dispensing device onto the substrate.
Item 86 is the use of a pressure sensitive adhesive or a multilayer pressure sensitive adhesive assembly according to any of items 1 to 77 for industrial applications, preferably for interior applications, more preferably for construction market applications, automotive applications or electronic applications.
Item 87 is the use of a pressure sensitive adhesive or a multilayer pressure sensitive adhesive assembly according to any of items 1 to 77 for the bonding to a low surface energy substrate and/or a medium surface energy substrate.
Item 88 is the use of a pressure sensitive adhesive or a multilayer pressure sensitive adhesive assembly according to any of items 1 to 77 for adhering to an oil contaminated substrate.
Item 89 is use of a pressure sensitive adhesive according to any of items 1 to 55 for pressure sensitive adhesive printing.
Item 90 is the use according to item 89 for hotmelt printing of a pressure sensitive adhesive.

### EXAMPLES

The present disclosure is further illustrated by the following examples. These examples are merely for illustrative purposes only and are not meant to be limiting on the scope of the appended claims.

### Test Methods applied:

### Ring and Ball Test Method

The softening point value of the glassy block compatible aromatic resin is determined according to Test Method ASTM E28-14.

### TGA test method

The TGA (Thermogravimetric Analysis) measurements are performed with a Q5000IR equipment from Texas Instruments. The samples are weighed in a platinum pan and placed with an auto sampler in the oven of the apparatus. The nitrogen flow through the oven is 25mL/min, the nitrogen flow through the balance is 10mL/min. The temperature is equilibrated at 30°C and is held for 15 minutes. Then the temperature is increased to 90°C with a ramp of 60°C/min. The 90°C are then held for 30 minutes. In a next step, the temperature is increased to 120°C with a ramp of 60°C/min. The 120°C are held for 60 minutes. The weight losses during 30 minutes at 90°C (VOC analysis) and during 60 minutes at 120°C (FOG analysis) are recorded.

The test is then completed by increasing the temperature to 800°C with a ramp of 10°C/min. Then, the temperature is equilibrated at 600°C, the oven is purged with air and the temperature is increased to 900°C with a ramp of 10°C/min.

### Oven Outgassing test method

A measure for the outgassing of raw material samples is accomplished by weighing 10g of the selected raw material into an aluminum cup with a precision of 0.1 mg. Prior to this step, the aluminum cup is already weighed out with a precision in the range of 0.1 mg. The weighed-in test sample is then placed into a forced air oven for 2 hours at 120°C or 2 hours at 160°C. Once the sample is removed from the oven, it is allowed to cool at ambient temperature (23°C +/- 2°C) for 30 minutes before weighing the filled aluminum cup again. The weight loss of the sample before and after oven drying is calculated and recorded in %.

### Thermal desorption analysis of organic emissions according to VDA test method 278

VDA method 278 is a test method used for the determination of organic emissions from non-metallic trim components used to manufacture the interior of motor vehicles (VDA stands for "Verband der Automobilindustrie", the German Association of Automobilists). The method classifies the emitted organic compounds into two groups:
VOC value - the sum of volatile and semi-volatile compounds up to n-C₂₅ and
FOG value - the sum of the semi-volatile and heavy compounds from n-C₁₄ to n-C₃₂

For measuring the VOC and FOG values, adhesive samples of 30mg +/- 5mg are weighed directly into empty glass sample tubes. The volatile and semi-volatile organic compounds are extracted from the samples into the gas stream and are then re-focused onto a secondary trap prior to injection into a GC for analysis. An automated thermal desorber (Markes International Ultra-UNITY system) is hereby used for the VDA 278 testing.

The test method comprises two extraction stages:
- VOC analysis, which involves desorbing the sample at 90°C for 30 minutes to extract VOC's up to n-C₂₅. This is followed by a semi-quantitative analysis of each compound as µg toluene equivalents per gram of sample.
- FOG analysis, which involves desorbing the sample at 120°C for 60 minutes to extract semi-volatile compounds ranging from n-C₁₄ to n-C₃₂. This is followed by semi-quantitative analysis of each compound as µg hexadecane equivalents per gram of sample.

The VOC values expressed are the average of two measurements per sample. The higher value of the measurements is indicated as the result, as described in the VDA278 test method. In order to determine the FOG value, the second sample is retained in the desorption tube after the VOC analysis and reheated to 120 °C for 60 minutes.

### 90°-Peel-test at 300 mm/min (according to FINAT Test Method No. 2, 8th edition 2009)

The single layer pressure sensitive adhesive films are laminated prior to testing on a 50 µm thick PET backing (commercially available as Hostaphan RN 50). The hereby obtained pressure sensitive adhesive strips are cut out in the machine direction from the pressure sensitive adhesive film sample material to provide test strips with a width of 12.7 mm and a length > 120 mm.

For test sample preparation the adhesive coated side of each PSA assembly strip is placed, after the liner is removed, with its adhesive side down on a clean test panel using light finger pressure. Next, the test samples are rolled twice with a standard FINAT test roller (weight 2 kg) at a speed of approximately 10 mm per second to obtain intimate contact between the adhesive mass and the surface. After applying the pressure sensitive adhesive assembly strips to the test panel, the test samples are allowed to dwell for 24 hours at ambient room temperature (23°C +/- 2°C, 50% relative humidity +/-5%) prior to testing.

For peel testing the test samples are in a first step clamped in the lower movable jaw of a Zwick tensile tester (Model Z020 commercially available from Zwick/Roell GmbH, Ulm, Germany). The pressure sensitive adhesive film strips are folded back at an angle of 90° and their free ends grasped in the upper jaw of the tensile tester in a configuration commonly utilized for 90° measurements. The tensile tester is set at 300 mm per minute jaw separation rate. Test results are expressed in Newton per 12.7 mm or Newton per 0.5 inch (N/12.7mm or N/0.5in). The quoted peel values are the average of two 90°-peel measurements.

### Static Shear-Test @ RT with 500g (according to FINAT Test Method 8, 8th edition 2009)

The test is carried out at ambient room temperature (23°C +/- 2°C and 50% +/- 5% relative humidity). The pressure sensitive adhesive films according to the disclosure are laminated on a 50 µm thick PET backing (commercially available as Hostaphan RN50). Test specimens are cut out of the sample material having a dimension of 13 mm by 175 mm. The liner is then removed and the adhesive strips are adhered onto Ceramic Clear 5 (CC5) plates with an overlap of 12.7 x 25.4 mm. A loop is prepared at the end of the test strip in order to hold the specified weight. Next, the test samples are rolled down four times with a standard FINAT test roller (weight 2 kg) at a speed of approximately 10 mm per second to obtain intimate contact between the adhesive mass and the surface. After applying the pressure sensitive adhesive assembly strips to the test panel, the test samples are allowed to dwell for 24 hours at ambient room temperature (23°C +/- 2°C, 50% relative humidity +/-5%) prior to testing.

Each sample is then placed into a vertical shear-stand (+2° disposition) providing automatic time logging. A 500g weight is hung into the loop. The time until failure is measured and recorded in minutes. Target value is 10.000 minutes. Two samples are measured for each construction. A recorded time of ">10000" indicates that the adhesive did not fail after 10000 min.

### Static shear test @ 70 °C or 90°C with 500g (FINAT Test Method No. 8. 8th edition 2009)

The test is carried out at 70°C or 90°C. The pressure sensitive adhesive film is laminated on a 50 µm thick PET backing (commercially available as Hostaphan RN50). Test specimens are cut out of the sample material having a dimension of 13 mm by 175 mm. The liner is then removed and the adhesive strips are adhered onto Ceramic Clear 5 (CC5) plates with an overlap of 12.7 x 25.4 mm. A loop is prepared at the end of the test strip in order to hold the specified weight. Next, the test samples are rolled down four times with a standard FINAT test roller (weight 2 kg) at a speed of approximately 10 mm per second to obtain intimate contact between the adhesive mass and the surface. After applying the pressure sensitive adhesive assembly strips to the test panel, the test samples are allowed to dwell for 24 hours at ambient room temperature (23°C +/- 2°C, 50% relative humidity +/-5%) prior to testing.

Each sample is then placed into a vertical shear-stand (+2° disposition) at 70°C or 90°C provided with automatic time logging. After 10 minutes dwell time in the oven, a 500g weight is hung into the loop. The time until failure is measured and recorded in minutes. Target value is 10.000 minutes. Two samples are measured for each construction. A recorded time of ">10000" indicates that the adhesive did not fail after 10000 min.

### Shear Adhesion Failure Temperature (SAFT)

The sample preparation for SAFT tests is as described above for the static shear test @ 70 °C or 90°C. The test specimen are hung in a programmable air forced oven and a weight of 500g is hung into the loop. The starting temperature is 23°C and the temperature is increased by 10°C every hour until reaching 130°C. The temperature at which the weight falls is recorded.

### Test Substrates used for testing:

The pressure sensitive adhesive assemblies according to the present disclosure are tested for their adhesive properties on following substrates:
- PP: polypropylene plate (PP Aquarius from Aquarius plastics, Guildford, England; 150cm x 50 x 2 mm), available from Rocholl GmbH, Aglatershausen, Germany.
- LDPE: low density polyethylene plate, available from Rocholl GmbH, Aglatershausen, Germany.

Prior to testing, the PP and LDPE substrates are cleaned as follows:

The PP panels are cleaned first with a dry tissue applied with gentle force to remove any residuals / waxy compounds on the surface and then cleaned with a mixture of isopropyl alcohol: distilled water (1:1) and dried with a tissue.

The adhesive tests are further also carried out on the following automotive clear coat panels:
- **CeramiClear5** ("CC5") coated panels available from PPG Industries.

The upper listed automotive clear coats include acrylic resins and polyesters used alone or with mixtures of copolymers comprising hydroxy- or glycidyl-functionalities or carbamatic acid residues (groups); or copolymers of acrylic acid and methacrylic acid esters with hydroxyl groups, free acid groups and further co-monomers (e.g. styrene). Panels are cut prior to 90 °peel and shear testing to the requested dimension. Before testing, the automotive clear coat coated panels are cleaned with a 1:1 mixture of isopropylalcohol and distilled water. Test panels are then wiped dry with a paper tissue.

### Raw materials used:

The raw materials and commercial adhesive tapes used are summarized in Table 1 below.

**Table 1: Raw material list.**

| Name | Description | Supplier |
|---|---|---|
| ACX 7065 | Black Acrylic foam tape with a thickness of 1200µm | Tesa |
| Kraton D1340 | Polymodal asymmetric SIS star block copolymer | Kraton polymers |
| Kraton D1161 | Linear SIS (Styrene-Isoprene-Styrene) triblock copolymer (15% Styrene, 19% Diblock) | Kraton polymers |
| Escorez 5615 | aliphatic/aromatic hydrocarbon tackifier, primarily compatible with the rubbery blocks | ExxonMobil |
| Regalite R9100 | Partially hydrogenated resin | Eastman |
| Regalite R1090 | Fully hydrogenated resin | Eastman |
| Piccotac 1020E | Liquid aliphatic hydrocarbon resin | Eastman |
| Endex 160 | glassy block compatible aromatic resin; RBSP of 160°C; Tg of 105°C, and Mw of 8600 g/mol. | Eastman |
| Novares TN170 | glassy block compatible aromatic resin; RBSP of 170°C, Tg of 120°C. | Rüttgers |
| Noryl SA90 | glassy block compatible aromatic resin; Tg of 135°C, and M_{w} of 1700 g/mol. | Eastman |
| Noryl SA120 | glassy block compatible aromatic resin; Tg of 165°C, and M_{w} of 6300 g/mol. | Eastman |
| Nyplast 222B | Mineral Oil | Nynas |
| Glissopal 1000 | Polyisobutylene of M_{w}=1600g/mol | BASF |
| Glissopal V1500 | Polyisobutylene of M_{w}=4140g/mol | BASF |
| Oppanol B12N | Polyisobutylene of M_{w}=51000g/mol | BASF |
| Irganox 1010 | Antioxidant | BASF |

### Screening of some raw materials with regard to low VOC:

In order to screen the raw materials concerning their outgassing behavior and thermal stability, an oven outgassing test, as described in the previous test method part, is performed at 120°C and 160°C. Results are provided in Table 2 below.

**Table 2**

| Raw Material | weight loss 2h 120°C (%) | weight loss 2h 160°C (%) |
|---|---|---|
| Regalite 9100 | 0,15 | 2,53 |
| Regalite 1090 | 0,25 | 4,99 |
| Escorez 5615 | 0,04 | 0,21 |
| Piccotac 1020E | 0,20 | 1,12 |
| Oppanol B12N | - | 0,07 |

In Table 2, the tackifying hydrocarbon resin Escorez 5615 shows a very low outgassing at 120°C and a very good thermal stability at 160°C. In contrast, Regalite R9100 and R1090 show higher outgassing behavior at 120°C and a significant weight loss at 160°C. The weight loss at 160°C provides a good indication of the thermal stability of a raw material and its behavior when processed at high temperatures in a hot melt type process.

Concerning the plasticizers, the polyisobutylene resin B12N shows very low outgassing behavior when compared to the liquid hydrocarbon resin Piccotac 1020E and excellent heat stability at 160°C.

Another way of screening the raw materials concerning their improved low VOC behavior is by TGA (thermogravimetric analysis) measurements, as previously described in the test method section. Results of the TGA measurements are found in Table 3 below, the values are an average of 2 measurements. These include also a comparison to an existing and commercially available acrylic adhesive based foam tape.

**Table 3**

| Raw Material | Weight loss 30 min at 90°C (in ppm) | Weight loss 60 min at 120°C (in ppm) |
|---|---|---|
| Kraton D1340 | 326±76 | 234±99 |
| Kraton D1161 | 669±47 | 253±101 |
| Regalite 9100 | 1353±223 | 10905±1325 |
| Regalite 1090 | 2409±457 | 20792±284 |
| Escorez 5615 | 258±153 | 727±180 |
| Novares TN170 | 348 | 1202 |
| Endex 160 | 362 | 1087 |
| Noryl SA90 | 894 | 723 |
| Noryl SA120 | 712 | 836 |
| Nyplast 222B | 1225±231 | 16817±1664 |
| Glissopal 1000 | 8730±622 | 18363±658 |
| Glissopal V1500 | 2310±148 | 4419±206 |
| Oppanol B12N | 285±34 | 538±25 |

From Table 3, the difference in outgassing of a polymeric plasticizer in function of their weight average molecular weight Mw can be further seen. While the polyisobutylene plasticizer Oppanol B12N with 51000 g/mol has very low outgassing at 90 and 120°C, Glissopal 1000 and V1500 which are polyisobutylenes having a weight average molecular weight M_{w} of respectively 1600 and 4140 g/mol have very high amounts of volatile organic compounds.

Among the hydrocarbon tackifiers compatible with the rubbery blocks, the TGA outgassing test clearly shows that for instance Escorez 5615 has by far a lower outgassing value and is more heat stable than Regalite 9100 or Regalite 1090.

### Preparation of pressure sensitive adhesives ("PSA"):

Half of the mass of raw materials as later indicated in Tables 4 and 5 are weighed in a glass jar. 75g of toluene is then added. The jar is covered with a metal lid and placed on rotating rolls. The mixture is then rolled for 2 days until all the components are dissolved.

The solutions are coated on a siliconized paper liner using a knife coater. The wet film is 300µm thick. The toluene is allowed to evaporate from the film for 20 minutes at room temperature (23°C +/- 2°C, 50% relative humidity +/-5%) before the PSA coating is annealed for 3 minutes at 110°C.

For allowing adhesive testing, the pressure sensitive adhesive layers are laminated onto a PET backing (commercially available as Hostaphan RN 50) having a film thickness of 50µm, resulting in a PSA tape comprising a PET backing.

The PSA tapes obtained from solvent coating are NOT subjected to any irradiation treatment to promote chemical crosslinking, such as e.g. e-beam crosslinked.

### Examples of pressure sensitive adhesives comprising glassy block compatible hydrocarbon aromatic resins (Examples 1 to 6):

Pressure sensitive adhesives examples 1 and 2 are based on the combination of a star shaped SIS polymer Kraton D1340, a hydrocarbon tackifier Escorez 5615 which is primarily compatible with the rubbery blocks, a glassy block compatible hydrocarbon aromatic resin Endex 160 or Novares TN170, and Oppanol B12N (PIB) as the polymeric plasticizer. Examples 3 to 6 are based on the combination of a star shaped SIS polymer Kraton D1340, a linear SIS polymer Kraton D1340, a hydrocarbon tackifier Escorez 5615 which is primarily compatible with the rubbery blocks, a glassy block compatible hydrocarbon aromatic resin Endex 160 or Novares TN170, and Oppanol B12N (PIB) as the polymeric plasticizer. Comparative example C1 is based on a linear SIS polymer Kraton D1340 and lacks a multi-arm block copolymer. Comparative example C2 is based on Kraton D1340, a star shaped SIS polymer, but lacks a glassy block compatible hydrocarbon aromatic resin. Irganox 1010 is added as an antioxidant to all examples.

**Table 4**

| | C1 (parts) | C2 (parts) | Ex.1 (parts) | Ex.2 (parts) | Ex.3 (parts) | Ex.4 (parts) | Ex.5 (parts) | Ex.6 (parts) |
|---|---|---|---|---|---|---|---|---|
| D1340 | - | 45.5 | 45.5 | 45.5 | 32 | 32 | 32 | 32 |
| D1161 | 45.5 | - | - | - | 13.65 | 13.65 | 13.65 | 13.65 |
| Oppanol B12N | 7.35 | 7.35 | 7.35 | 7.35 | 7.35 | 7.35 | 7.35 | 7.35 |
| Endex 160 | - | - | 10.5 | - | 15.75 | 21 | - | - |
| Novares TN170 | 10.5 | - | - | 10.5 | - | - | 15.75 | 21 |
| Escorez 5615 | 33.5 | 44 | 33.5 | 33.5 | 28.25 | 23 | 28.25 | 23 |
| Irganox 1010 | 1.35 | 1.35 | 1.35 | 1.35 | 1.35 | 1.35 | 1.35 | 1.35 |

### Examples of pressure sensitive adhesives comprising glassy block compatible polyarylene oxide resins (Examples 7 to 10):

Pressure sensitive adhesives examples 7 to 10 are based on the combination of a star shaped SIS polymer Kraton D1340, a hydrocarbon tackifier Escorez 5615 which is primarily compatible with the rubbery blocks, a glassy block compatible polyarylene oxide resin Noryl SA90 or Noryl SA120, and Oppanol B 12N (PIB) as the polymeric plasticizer. Irganox 1010 is added as an antioxidant to all examples.

**Table 5**

| | Ex.7 (parts) | Ex.8 (parts) | Ex.9 (parts) | Ex.10 (parts) |
|---|---|---|---|---|
| D1340 | 45.5 | 45.5 | 45.5 | 45.5 |
| Oppanol B12N | 7.35 | 7.35 | 7.35 | 7.35 |
| Noryl SA90 | - | - | 2.6 | 10.5 |
| Noryl SA120 | 2.6 | 10.5 | - | - |
| Escorez 5615 | 41.4 | 33.5 | 41.4 | 33.5 |
| Irganox 1010 | 1.35 | 1.35 | 1.35 | 1.35 |

### Mechanical Test Results of the pressure sensitive adhesives

### 90°Peel test results at room temperature (RT)

90° Peel test results of the examples at room temperature are shown in Table 6 below.

**Table 6**

| Example No | 90° Peel to CC5 (N/12.7mm) | 90° Peel to PP (N/12.7mm) | 90° Peel to LDPE (N/12.7mm) |
|---|---|---|---|
| C1 | 6.3 | 4.5 | - |
| C2 | 18.6 | 13.9 | - |
| Ex.1 | 14.1 | 12.5 | - |
| Ex.2 | 18.1 | 13.6 | - |
| Ex.3 | 11.4 | 10.7 | - |
| Ex.4 | 8.9 | 8.6 | - |
| Ex.5 | 16.6 | 10.9 | - |
| Ex.6 | 14.8 | 9.6 | - |
| Ex.7 | 14.2 | 13.0 | 13.3 |
| Ex.8 | 9.8 | 8.6 | 2.5 |
| Ex.9 | 19.4 | 15.2 | 14.5 |
| Ex.10 | 16.9 | 12.8 | 4.5 |

### Static Shear Test results at 90°C and SAFT test

Static Shear test results and SAFT test results are listed in Table 7 below.

**Table 7**

| | Static Shear at 90°C on CC5 (min) | SAFT on CC5 [°C] |
|---|---|---|
| C1 | 106 | 80 |
| C2 | 296 | 80 |
| Ex.1 | > 10000 | 110 |
| Ex.2 | > 10000 | 110 |
| Ex.3 | > 10000 | 110 |
| Ex.4 | > 10000 | 110 |
| Ex.5 | > 10000 | 110 |
| Ex.6 | > 10000 | 110 |
| Ex.7 | > 10000 | 120 |
| Ex.8 | > 10000 | > 130 |
| Ex.9 | > 10000 | 110°C |
| Ex.10 | > 10000 | 130°C |

As apparent from the results shown in Tables 6 and 7, the pressure sensitive adhesives according to the present disclosure have outstanding high temperature static shear and SAFT performance, while preserving excellent peel adhesion performance on various difficult to bond substrates, including LSE substrates and automotive clear coats.

## Claims

1. A pressure sensitive adhesive comprising:
a) a multi-arm block copolymer of the formula Qₙ-Y, wherein:
(i) Q represents an arm of the multi-arm block copolymer and each arm independently has the formula G-R,
(ii) n represents the number of arms and is a whole number of at least 3, and
(iii) Y is the residue of a multifunctional coupling agent,
wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polymeric plasticizer having a weight average molecular weight M_{w} comprised between 10.000 and 100.000 g/mol;
c) at least one hydrocarbon tackifier which is primarily compatible with the rubbery blocks;
d) a glassy block compatible aromatic resin having a softening point value (RBSP) of at least 150°C, when measured by the ring and ball test method described in the experimental section; and
e) optionally, a linear block copolymer of the formula L-(G)ₘ, wherein L is a rubbery block comprising a polymerized olefin, a polymerized conjugated diene, a hydrogenated derivative of a polymerized conjugated diene, or any combinations thereof; and wherein m is 1 or 2.

2. A pressure sensitive adhesive according to claim 1, wherein the glassy block compatible aromatic resin has a weight average molecular weight M_{w} of 30.000 g/mol or less, of 25.000 g/mol or less, of 20.000 g/mol or less, of 15.000 g/mol or less, or even of 10.000 g/mol or less.

3. A pressure sensitive adhesive according to claim 1 or 2, wherein the glassy block compatible aromatic resin has a softening point value (RBSP) of at least 155°C, at least 160°C, at least 165°C, at least 170°C, at least 180°C, at least 190°C or even at least 200°C, when measured by the ring and ball test method described in the experimental section.

4. A pressure sensitive adhesive according to any of the preceding claims, wherein the glassy block compatible aromatic resin has a glass transition temperature (Tg) of at least 100°C, at least 110°C, at least 120°C, at least 130°C, at least 140°C, at least 150°C, or even at least 160°C, when measured by the ring and ball test method described in the experimental section.

5. A pressure sensitive adhesive according to any of the preceding claims, wherein the glassy block compatible aromatic resin is selected from the group consisting of hydrocarbon aromatic resins, arylene oxide resins, C9-based hydrocarbon aromatic resins, C9-based hydrogenated hydrocarbon aromatic resins, polyarylene oxide resins, in particular polyphenylene oxides or polyphenylene ethers, indene coumarone resins, aromatic resins based on copolymers of C9 with maleic anhydride, and any combinations or mixtures thereof.

6. A pressure sensitive adhesive according to any of the preceding claims, wherein the polymeric plasticizer has a weight average molecular weight M_{w} comprised between 10.000 and 80.000 g/mol, between 20.000 and 70.000 g/mol, between 25.000 and 65.000 g/mol, between 25.000 and 60.000 g/mol, between 30.000 and 60.000 g/mol, or even between 30.000 and 55.000 g/mol.

7. A pressure sensitive adhesive according to any of the preceding claims, wherein the polymeric plasticizer is a polyisobutylene plasticizer.

8. A pressure sensitive adhesive according to any one of the preceding claims, which comprises:
a) from 20 wt% to 80 wt%, from 20 wt% to 70 wt%, from 25 wt% to 60 wt%, from 30 wt% to 60 wt%, or even from 35 wt% to 60 wt% of the multi-arm block copolymer, based on the weight of the pressure sensitive adhesive;
b) from 20 wt% to 70 wt%, from 25 wt% to 60 wt%, or even from 25 wt% to 50 wt% of the hydrocarbon tackifier which is primarily compatible with the rubbery blocks, based on the weight of the pressure sensitive adhesive;
c) from 2 wt% to 20 wt%, from 4 wt% to 15 wt%, from 5 wt% to 12 wt%, or even from 5 wt% to 10 wt% of a polymeric plasticizer, based on the weight of the pressure sensitive adhesive;
d) from 0.5 to 35 wt%, from 1 to 30 wt%, from 2 to 25 wt%, or even from 5 to 25 wt% of the glassy block compatible aromatic resin;
e) optionally, from 20 wt% to 80 wt%, from 20 wt% to 70 wt%, from 25 wt% to 60 wt%, from 30 wt% to 60 wt%, or even from 35 wt% to 60 wt% of the linear block copolymer, based on the weight of the pressure sensitive adhesive; and
f) optionally, from 2 wt% to 30 wt%, from 2 wt% to 20 wt%, or even from 2 wt% to 15 wt% of a filler material preferably selected from the group of expandable microspheres and glass bubbles, based on the weight of the pressure sensitive adhesive.

9. A pressure sensitive adhesive according to any one of the preceding claims, which is non-crosslinked, in particular not crosslinked with actinic radiation, more in particular with e-beam or UV irradiation.

10. A pressure sensitive adhesive according to any one of the preceding claims, which is free of any crosslinking additive, in particular free of multifunctional (meth)acrylate compounds.

11. A pressure sensitive adhesive according to any one of the preceding claims, which is free of processing oil, in particular mineral oil.

12. A pressure sensitive adhesive according to any one of the preceding claims, which is a hot melt adhesive.

13. A method of manufacturing a pressure sensitive adhesive according to any of claims 1 to 12, which comprises the step of compounding the multi-arm block copolymer, the polymeric plasticizer, the at least one hydrocarbon tackifier which is primarily compatible with the rubbery blocks, the glassy block compatible aromatic resin, and optionally, the linear block copolymer.

14. A method according to claim 13, which is free of any crosslinking step, in particular crosslinking step with actinic radiation, more in particular with e-beam or UV irradiation.

15. Use of a pressure sensitive adhesive according to any of claims 1 to 12 for industrial applications, preferably for interior applications, more preferably for construction market applications, automotive applications or electronic applications.
